(19) Europäisches Patentamt
European Patent Office
Office européen des brevets

(11) **EP 4 586 183 A1**

(12) **EUROPEAN PATENT APPLICATION**
published in accordance with Art. 153(4) EPC

(43) Date of publication:
**16.07.2025 Bulletin 2025/29**

(21) Application number: 23875080.6

(22) Date of filing: 06.09.2023

(51) International Patent Classification (IPC):
*G06T 5/00* (2024.01)      *G06T 5/50* (2006.01)
*G06T 7/90* (2017.01)      *G06T 3/40* (2024.01)
*H04N 9/67* (2023.01)      *G06T 1/60* (2006.01)

(52) Cooperative Patent Classification (CPC):
G06T 1/60; G06T 3/40; G06T 5/00; G06T 5/50;
G06T 7/90; H04N 9/67

(86) International application number:
**PCT/KR2023/013352**

(87) International publication number:
**WO 2024/076011 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 06.10.2022  KR 20220128153
             08.02.2023  KR 20230016522

(71) Applicant: Samsung Electronics Co., Ltd.
Suwon-si, Gyeonggi-do 16677 (KR)

(72) Inventors:
• CHOI, Joonhyun
  Suwon-si Gyeonggi-do 16677 (KR)
• KIM, Boyoung
  Suwon-si Gyeonggi-do 16677 (KR)
• CHO, Wonguen
  Suwon-si Gyeonggi-do 16677 (KR)
• SOHN, Jaesik
  Suwon-si Gyeonggi-do 16677 (KR)
• KIM, Hyunsool
  Suwon-si Gyeonggi-do 16677 (KR)

(74) Representative: Nederlandsch Octrooibureau
P.O. Box 29720
2502 LS The Hague (NL)

(54) **ELECTRONIC DEVICE FOR VIDEO EDITING AND OPERATION METHOD THEREOF**

(57)      Disclosed is an electronic device comprising: a memory; and at least one processor. The at least one processor may be configured to: acquire a first image; generate a first input frame to be blended with the first image, wherein each piece of pixel data of the first input frame includes RGB data and mask information indicating a blending method of each piece of pixel data; allocate, to the first input frame, a first alpha map including alpha values for each pixel for the first input frame; determine a blending method for frame color blending of the first input frame and the first image, on the basis of the mask information; perform frame color blending on the first input frame and a second input frame of the first image, on the basis of the determined blending method and the first alpha map; and output a second image generated by the frame color blending.

FIG. 6

**Description**

[Technical Field]

Various embodiments of the disclosure relate to an electronic device for performing video editing and an operating method thereof.

[Background Art]

An increasing number of services and additional functions are being provided through electronic devices, such as user terminals, for example, smartphones. To increase usefulness of electronic devices and satisfy various user demands, communication service providers or electronic device manufacturers are competitively developing electronic devices that provide various functions. Accordingly, various functions provided through electronic devices are becoming increasingly sophisticated.

An electronic device may include functions of generating (e.g., encoding) media data (e.g., videos or images) or editing media data. Media data may include a video to which a high dynamic range (HDR) is applied (hereinafter, referred to as an "HDR video"). The HDR is a technology of more precisely distinguishing brightness and darkness to display images similar to those perceived by a user with eyes.

Video editing may include decoding, processing, and encoding. Decoding may be an operation of decomposing (e.g., decompressing) a compressed video file into image data (e.g., frames) and audio data, processing may be an operation of editing decomposed image data and audio data, and encoding is an operation of recompressing edited image data and audio data to generate a video file. Processing may include, for example, at least one of trimming, speed editing, transformation (e.g., rotation and/or cropping), filtering, tone mapping, applying a sticker, applying text, or drawing.

In a video editing operation, memory usage of an electronic device is essential. Memory capacity required for video editing may be determined according to video editing software that is used, the type of a scene to be edited, and the number of other applications or programs to be used simultaneously with video editing. Generally, video editing software requires a large amount of memory, and thus additional memory (e.g., random access memory (RAM)) may be required for a smooth video editing experience.

[Detailed Description of the Invention]

[Technical Solution]

An electronic device according to an embodiment may include memory and at least one processor. The at least one processor may be configured to obtain a first image. The at least one processor may be configured to generate a first input frame to be blended with the first image. Each pixel data of the first input frame may include RGB data and mask information indicating a blending method for the pixel data. The at least one processor may be configured to allocate a first alpha map including alpha values per pixel for the first input frame to the first input frame. The at least one processor may be configured to determine the blending method for frame color blending of the first input frame and the first image, based on the mask information. The at least one processor may be configured to perform frame color blending of the first input frame and a second input frame of the first image, based on the determined blending method and the first alpha map. The at least one processor may be configured to output a second image generated by the frame color blending.

A method of an electronic device for video editing according to an embodiment may include obtaining a first image. The method may include generating a first input frame to be blended with the first image. Each pixel data of the first input frame may include RGB data and mask information indicating a blending method for the pixel data. The method may include allocating a first alpha map including alpha values per pixel for the first input frame to the first input frame. The method may include determining the blending method for frame color blending of the first input frame and the first image, based on the mask information. The method may include performing frame color blending of the first input frame and a second input frame of the first image, based on the determined blending method and the first alpha map. The method may include outputting a second image generated by the frame color blending.

A non-transitory computer-readable recording medium according to an embodiment may store one or more programs, and the one or more programs may include instructions that, when executed by a processor of an electronic device, cause the electronic device to: obtain a first image; generate a first input frame to be blended with the first image, each pixel data of the first input frame including RGB data and mask information indicating a blending method for the pixel data; allocate a first alpha map including alpha values per pixel for the first input frame to the first input frame; determine the blending method for frame color blending of the first input frame and the first image, based on the mask information; perform frame color blending of the first input frame and a second input frame of the first image, based on the determined blending method and the first alpha map; and output a second image generated by the frame color blending.

[Brief Description of Drawings]

FIG. 1 is a block diagram of an electronic device in a network according to various embodiments;
FIG. 2 is a block diagram illustrating the configuration of an electronic device that performs video editing according to an embodiment;
FIG. 3 illustrates SDR-to-HDR conversion according to an embodiment;
FIG. 4A illustrates an HDR format of RGBA16F according to an embodiment;
FIG. 4B illustrates an HDR format of RGBA 10101012 according to an embodiment;
FIG. 5A illustrates SDR video editing according to an embodiment;
FIG. 5B illustrates HDR video editing according to an embodiment;
FIG. 6 illustrates video editing in an HDR environment according to an embodiment;
FIG. 7 illustrates an HDR image frame and alpha information for video editing according to an embodiment;
FIG. 8 illustrates frame color blending using an alpha map according to an embodiment;
FIG. 9A illustrates alpha blending reusing an alpha map according to an embodiment;
FIG. 9B illustrates pre-multiplied RGB blending according to an embodiment;
FIG. 10 is a flowchart illustrating a video editing procedure according to an embodiment;
FIG. 11 illustrates an edit object generated through a pen input function according to an embodiment;
FIG. 12 illustrates an edit object image including pixel-based mask information according to an embodiment;
FIG. 13 illustrates a pen stroke including a mosaic pen according to an embodiment;
FIG. 14 illustrates sticker blending not using mask information according to an embodiment;
FIG. 15 illustrates sticker blending using mask information according to an embodiment;
FIG. 16 illustrates frame color blending based on an alpha map and mask information according to an embodiment;
FIG. 17 is a flowchart illustrating a video editing procedure using an alpha map according to an embodiment;
FIG. 18 is a flowchart illustrating a doodle blending procedure using mask information according to an embodiment;
FIG. 19 is a flowchart illustrating a sticker blending procedure using mask information according to an embodiment;
FIG. 20 illustrates memory usage according to an embodiment; and
FIG. 21A and FIG. 21B illustrate storage of a doodle image according to an embodiment.

[Mode for Carrying out the Invention]

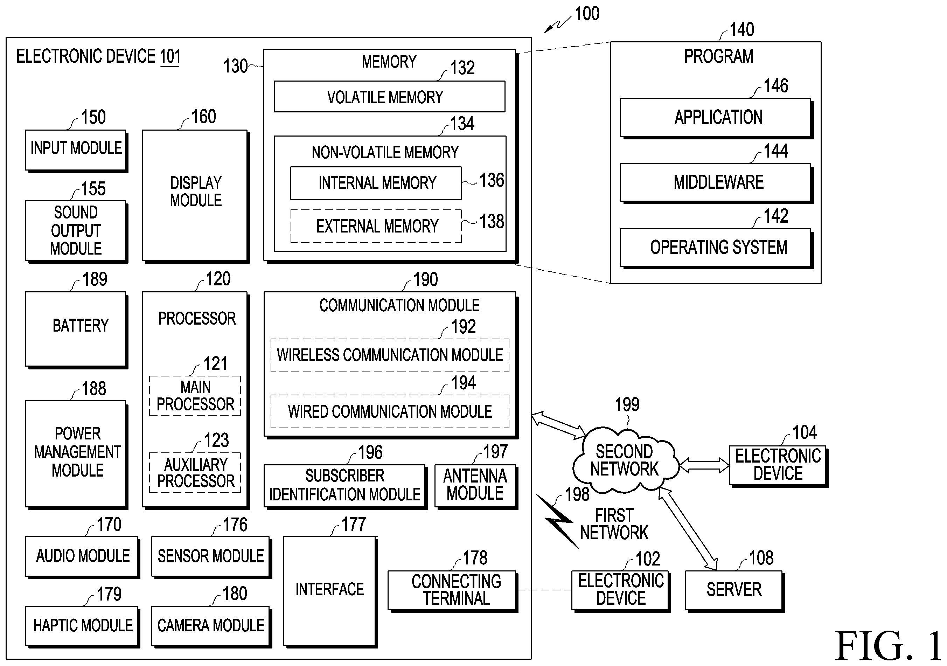

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

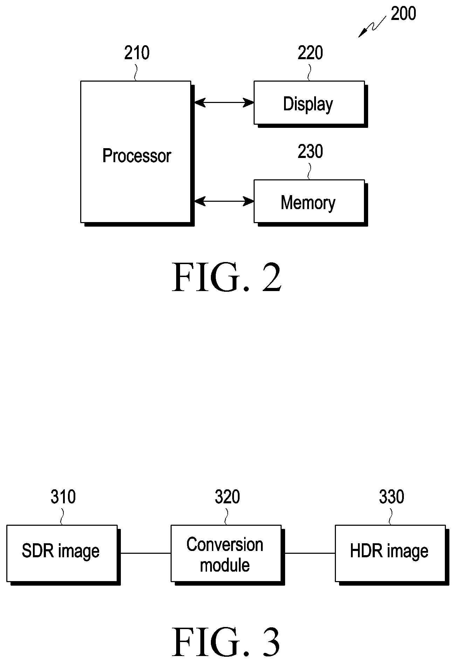

FIG. 2 is a block diagram illustrating the configuration of an electronic device that performs video editing according to an embodiment.

Referring to FIG. 2, the electronic device 200 (e.g., the electronic device 101) may include a processor 210 (e.g., the processor 120), a display 220 (e.g., the display module 160), and memory 230 (e.g., the memory 130). The processor 210 may include, for example, a central processing unit (CPU) and/or a graphics processing unit (GPU).

The processor 210 may perform video editing on media data (e.g., an image or a video) read from the memory 230 or received from an external electronic device (not shown). In an embodiment, video editing may include decoding, video processing, and/or encoding. Decoding may decompress (e.g., decode) a compressed video file into image data (e.g., frames, image frames, or video frames) and audio data. Video processing may edit decomposed image data and audio data. Video processing may include, for example, at least one of trimming, speed editing, transformation (e.g., rotation and/or cropping), filtering, tone mapping, a sticker, text, or drawing. Encoding may compress image data and audio data edited by video processing to generate a new video file.

The processor 210 may configure (e.g., allocate) a plurality of frame buffers in the memory 230 for video editing. The processor 210 may store frames configured through decoding respectively in the plurality of frame buffers, and may read out and edit the frames stored in the frame buffers one by one. The edited frames may be stored again in the corresponding frame buffers. The processor 210 may configure (e.g., allocate) a memory area for storing information related to video editing in the memory 230. In an embodiment, the information related to video editing may include edit objects and/or alpha information (e.g., alpha values) for alpha blending. In an embodiment, the edit objects may be generated based on a user input during the video editing, and stored in the memory area.

In an embodiment, alpha blending may refer to a process of generating partial or whole transparency when combining one image with another image (e.g., a background image) in video editing. Alpha blending may impart a specified transparency (e.g., a transparent property) to pixels of the image and combine the pixels of the image with pixels of the background image. The transparency of each pixel may be determined by a corresponding alpha value, and the alpha value may be included in pixel data of the image or be separately specified.

In video editing, a mode of processing edited content (e.g., edited frames) may include a preview or storage (e.g., export). In video editing in a preview mode, the processor 210 may sequentially read out the edited frames from the frame buffers and output the frames to the display 220. In an embodiment, the display 220 may include an external display device included in the electronic device 200 or connected via a communication circuit (e.g., the communication module 190). In video editing in an export mode, the processor 210 may sequentially read out the edited frames from the frame buffers and encode the frames to generate new media data (e.g., a video file).

In embodiments of the disclosure, media data may include image data (e.g., an HDR image and/or an HDR video) to which HDR (e.g., HDR10 or HDR10+) is applied. The processor 210 may be configured to edit and store an HDR image in an HDR environment in order to save the memory and improve performance under a condition that video quality is not lost. In video editing in the HDR environment, the memory may be excessively used to store editing information (e.g., edit objects) generated depending on a pixel format representing the HDR image in a complex video editing process, or some editing information may be lost. In embodiments of the disclosure, the processor 210 may reuse some memory areas (e.g., a memory area for storing alpha information for alpha blending) allocated in the video editing process for next editing (e.g., blending) to reduce a buffer read operation, thereby improving editing performance and increasing memory usage efficiency. In embodiments of the disclosure, the processor 210 may use some bits of the pixel format representing the HDR image as mask information for a pixel-based editing function (e.g., a blending method), thereby improving the editing performance without increasing required memory capacity.

Video editing may be performed based on a high dynamic range (HDR) color space or a standard dynamic range (SDR) color space. According to an embodiment, the electronic device 200 may perform video editing in an SDR environment, and may perform an operation of converting an SDR-based image (e.g., an SDR image and/or an SDR video) on which video editing has been completed into an HDR-based image (e.g., an HDR image and/or an HDR video) to obtain an HDR-based edited image.

FIG. 3 illustrates SDR-to-HDR conversion according to an embodiment.

Referring to FIG. 3, an SDR image 310 may be converted into an HDR image 330 through a conversion module 320. The conversion module 320 may be configured, for example, as a software module included in the processor 210 (e.g., executed by the processor 210). The conversion module 320 may include de-gamma (e.g., gamma decoding) and scaling, gamut conversion, and re-gamma (e.g., gamma encoding).

To blend image frames with different color spaces, the image frames may be converted to have the same color space before blending. An image frame (e.g., an SDR image 310) edited in an SDR environment may be converted into an HDR image by the conversion module 320.

An RGB color space, which is one of the color spaces, may refer to a method of expressing one pixel as red (R), green (G), blue (B), and alpha (A). Here, A may refer to an alpha value indicating the transparency of the pixel. In an embodiment, one pixel of an SDR image (e.g., the SDR image 310) may be expressed as a color type of RGBA 8888 (8 bits per color channel). In an embodiment, one pixel of an HDR image (e.g., the HDR image 330) may be expressed as an RGBA 16Float (RGBA16F) type (e.g., a P016 format) or an RGBA 1010102 type (e.g., an HDR10/10+ format).

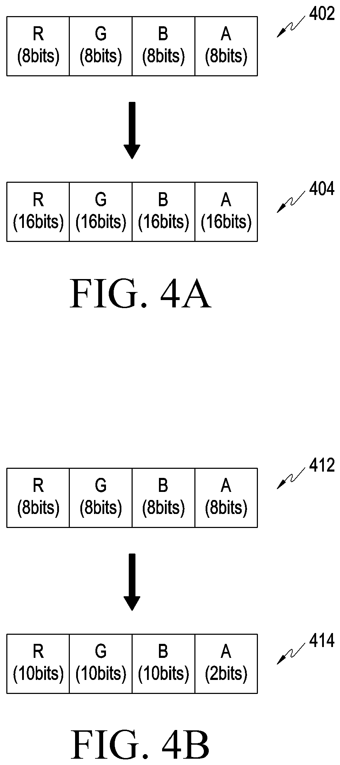

FIG. 4A illustrates an HDR format of RGBA16F according to an embodiment.

Referring to FIG. 4A, SDR pixel data 402 of an SDR image (e.g., the SDR image 310) may include 8 bits representing R, 8 bits representing G, 8 bits representing B, and 8 bits representing A (e.g., alpha $\alpha$). For example, the SDR pixel data 402 may be referred to as an RGBA8888 type. The SDR pixel data 402 may be converted into HDR pixel data 404 of an RGBA16F type through SDR-HDR conversion (e.g., the conversion module 320). The HDR pixel data 404 may include 16 bits representing R, 16 bits representing G, 16 bits representing B, and 16 bits representing A. In the HDR pixel data 404, since R, G, B, and A are all 16 bits, an HDR image (e.g., the HDR image 330) may occupy 8 bytes per pixel.

FIG. 4B illustrates an HDR format of RGBA 10101012 according to an embodiment.

Referring to FIG. 4B, SDR pixel data 412 including R, G, B, and A each expressed as 8 bits may be converted into HDR pixel data 414 of an RGBA 1010102 type through SDR-HDR conversion (e.g., the conversion module 320). The HDR pixel data 414 may include 10 bits representing R, 10 bits representing G, 10 bits representing B, and 2 bits representing A.

An image frame obtained through decoding may include color information (e.g., R, G, and B) in an opaque form. The conversion module 320 supporting HDR10 may configure the HDR pixel data 414 of 1 word (4 bytes) by expressing R, G, and B, which each represent a color, as 10 bits and adding a 2-bit dummy to express A. The HDR pixel data 414 may occupy a memory area of the same size (e.g., 4 bytes) as a memory area required for color expression of the SDR pixel data 412. An HDR image (e.g., the HDR image 330) including the HDR pixel data 414 may occupy 4 bytes per pixel.

For example, in HDR editing using the RGBA16F type, an 8-byte memory area for expressing each of R, G, B, and A as 16 bits may be required to store one pixel data (e.g., the HDR pixel data 404). Therefore, HDR editing using the RGBA16F type may require memory usage twice that for SDR pixel data (e.g., the SDR pixel data 402) using RGBA8888. Further, additional memory capacity may be required to store editing information (e.g., edit objects and/or alpha information) while editing the edit objects for video editing and synthesizing (e.g., blending) the edit objects with an original video (e.g., each frame of the video), which may cause a deterioration in performance of the electronic device 200 during video editing.

For example, in HDR editing using the RGBA 1010102 type, a 4-byte memory area for R, G, B, and A may be required to store one pixel data (e.g., the HDR pixel data 414). In this case, a difference in precision may occur between RGB information (R, G, and B) and alpha information (A) when expressing a color space of HDR10 with 32 bits. Alpha blending may be a very important operation in video editing. However, when using alpha information of 2 bits, which is less than 8 bits of the SDR pixel data 412, editing information (e.g., some of 8-bit alpha information) may be lost when performing alpha blending or animation, and thus natural alpha blending may not be performed.

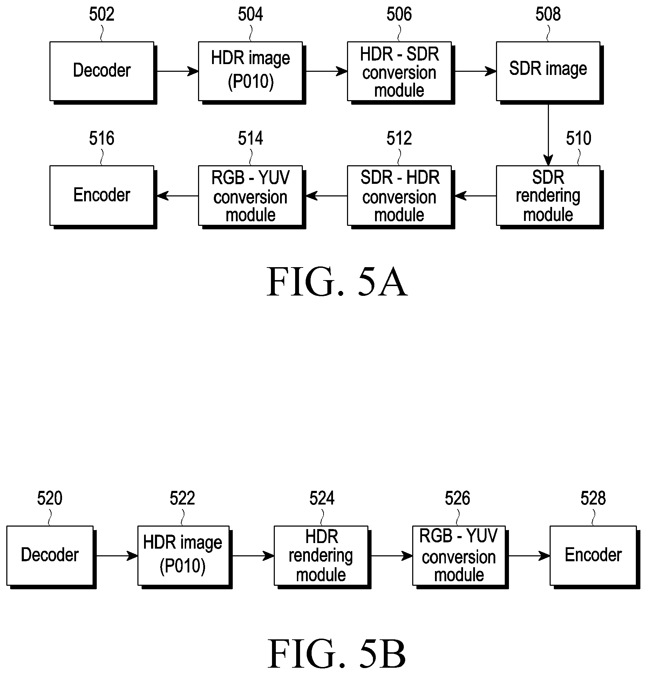

FIG. 5A illustrates SDR video editing according to an embodiment.

Referring to FIG. 5A, a decoder 502 may decode compressed media data (e.g., a video file) to output an HDR image 504 (e.g., an HDR image frame in an HDR10/10+ format). An HDR-SDR conversion module 506 may convert the HDR image 504 into an SDR image 508 (e.g., an RGBA 8888 format). An SDR rendering module 510 may perform video editing (e.g., blending and/or rendering) on the SDR image 508 in an SDR environment, and may output an edited SDR image (not shown).

An SDR-HDR conversion module 512 may convert the edited SDR image into an edited HDR image (e.g., an HDR image frame the in HDR10/10+ format) (not shown). An RGB-YUV conversion module 514 may convert the edited HDR image into a YUV image (e.g., a YUV image frame) in a YUV format. The YUV image may express each pixel as a luminance component Y and two chrominance components (e.g., U representing blue projection and V representing red projection). An encoder 516 may encode the YUV image to generate edited media data (e.g., an edited video file).

The SDR rendering module 510 may be configured to perform rendering (e.g., blending) in the SDR color space, and may thus need the HDR-SDR conversion module 506 to convert the HDR image 504 into the SDR image 508. Accordingly, the quality of the HDR image 504 may be lost. Further, the SDR-HDR conversion module 512 may be additionally used to convert the edited SDR image into an HDR format.

In an embodiment, at least one of the decoder 502, the HDR-SDR conversion module 506, the SDR rendering module 510, the SDR-HDR conversion module 512, the RGB-YUV conversion module 514, or the encoder 516 may be configured as a software module executed by a processor (e.g., the processor 210).

FIG. 5B illustrates HDR video editing according to an embodiment.

Referring to FIG. 5B, a decoder 520 may decode compressed media data (e.g., a video file) to output an HDR image 522 (e.g., an HDR image frame in an HDR10/10+ format). An HDR rendering module 524 may perform video editing (e.g., blending and/or rendering) on the HDR image 522 in an HDR environment, and may output an edited HDR image (e.g., an HDR image frame in the HDR10/10+ format) (not shown). An RGB-YUV conversion module 526 may convert the edited HDR image into a YUV image (e.g., a YUV image frame). An encoder 528 may encode the YUV image to generate edited media data (e.g., an edited video file).

In an embodiment, at least one of the decoder 520, the HDR rendering module 524, the RGB-YUV conversion module 526, or the encoder 528 may be configured as a software module executed by a processor (e.g., the processor 210).

Embodiments of the disclosure may support HDR rendering (e.g., blending) that enables use of editing functions of an SDR environment while maintaining the quality of an original HDR image (e.g., the HDR image 522). Embodiments of the disclosure may reduce an increase in memory usage during HDR rendering compared to SDR rendering.

In embodiments of the disclosure, the electronic device 200 may reuse a memory area in which alpha information used for alpha blending is stored while performing complex video editing, thereby resolving inaccuracy of the alpha information and reducing memory usage for playback and/or storage.

In the embodiments of the disclosure, the electronic device 200 may reuse a memory area in which alpha information is stored, thereby providing mask information for a pixel-based editing function (e.g., pixel-based blending of a doodle and/or a sticker) by using secured extra bits.

In the embodiments of the disclosure, the electronic device 200 may use the RGBA 1010102 type to express HDR color information, but perform alpha blending by repeatedly using alpha information (e.g., an alpha map) stored in a separate memory area when necessary instead of including the alpha information in pixel data (e.g., HDR pixel data 708) of the RGBA 1010102 type, thereby eliminating inaccuracies caused by using the 2-bit alpha information (A) in a video editing process and reducing memory usage.

In the embodiments of the disclosure, the electronic device 200 may store alpha information (e.g., an alpha map) to be used for alpha blending in a specified memory area (e.g., a first area), and may use the alpha information that is not included in pixel data (e.g., the HDR pixel data 708) when alpha blending is required, thereby reducing memory read operations.

In embodiments of the disclosure, the electronic device 200 may configure mask information (e.g., mask information 706) for applying a pixel-based editing effect (e.g., pixel-based blending of a doodle or a sticker) in video editing in idle 2 bits in pixel data secured by using alpha information in a specified memory area (e.g., the first area).

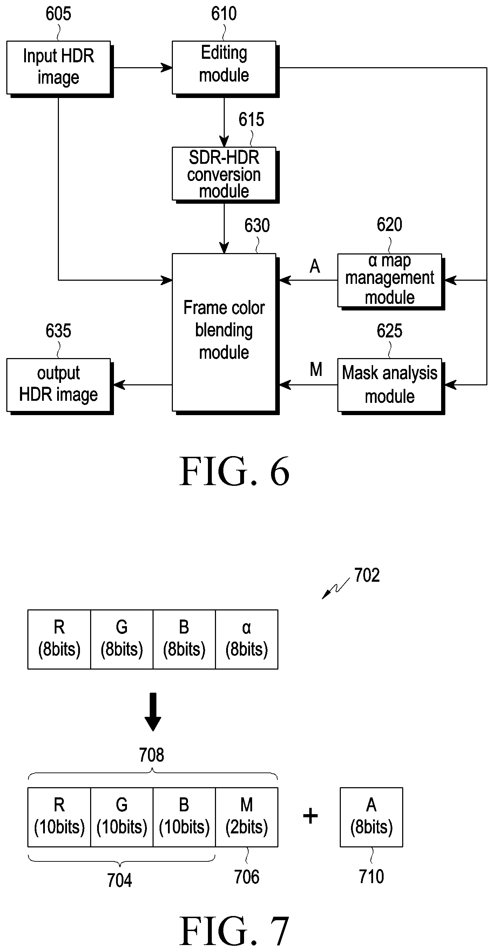

FIG. 6 illustrates video editing in an HDR environment according to an embodiment.

Referring to FIG. 6, the processor 210 of the electronic device 200 may include at least one of an editing module 610, an SDR-HDR conversion module 615, an alpha ($\alpha$) map management module 620, a mask analysis module 625, or a frame color blending module 630. In an embodiment, at least one of the editing module 610, the SDR-HDR conversion module 615, the alpha ($\alpha$) map management module 620, the mask analysis module 625, or the frame color blending module 630 may correspond to an HDR rendering module (e.g., the HDR rendering module 524). In an embodiment, at least one of the editing module 610, the SDR-HDR conversion module 615, the alpha ($\alpha$) map management module 620, the mask analysis module 625, or the frame color blending module 630 may be configured as a software module executed by the processor 210. For example, an operation of at least one of the editing module 610, the SDR-HDR conversion module 615, the alpha ($\alpha$) map management module 620, the mask analysis module 625, or the frame color blending module 630 may be understood as an operation of the processor 210.

For HDR video editing, an input HDR image 605 (e.g., at least one frame) may be selected by a user. In an embodiment, the input HDR image 605 may be read from memory (e.g., the memory 230 of FIG. 2 or external memory (not shown)), recorded by a camera (not shown), or received from an external electronic device (not shown) to the electronic device 210. The input HDR image 605 may be stored in a specified memory area (e.g., frame buffers) to be used for video editing. For example, a specified number of frames of the input HDR image 605 may be stored respectively in the specified number of frame buffers. The input HDR image 605 is generated through decoding, and thus may not include alpha information. For example, when the input HDR image 605 (e.g., an RGB frame) is first stored in one of the frame buffers, a memory space (e.g., 2 bits) for alpha information per pixel may be empty.

The editing module 610 may generate one or more objects to be used for editing (hereinafter, referred to as edit objects) through editing functions provided for video editing. For example, at least one of the edit objects may include a doodle image (e.g., a pen stroke) or a sticker image. In an embodiment, the editing module 610 may generate edit objects through a user input, or may read edit objects from the memory (e.g., the memory 230). In an embodiment, the editing module 610 may change (e.g., edit) edit objects through a user input.

At least some of the edit objects to be used for video editing may include an SDR image. The SDR-HDR conversion module 615 may convert edit objects in an SDR format (e.g., SDR images) into RGB frames in an HDR format. The SDR-HDR conversion module 615 may convert the edit objects into the RGB frames in the HDR format editable and synthesizable in an HDR environment. Each RGB frame output from the SDR-HDR conversion module 615 may include, for example, pixel data (e.g., the pixel data 708) including 10 bits per color channel of an HDR color space, and each pixel data may not include alpha information (e.g., an alpha value 710). The RGB frames may be stored in a specified memory area (e.g., a second area) of the memory 230 to be used for video editing.

In an embodiment, the edit objects may include at least one of a sticker, a caption, a doodle, a transition, tone mapping, or a filter. In an embodiment, at least one of the edit objects may include a texture image that a user wants to add or synthesize with an original image (e.g., the input HDR image 605).

In an embodiment, the editing module 610 may generate mask information corresponding to the edit objects. In an embodiment, when storing the RGB frames including the edit objects in the specified memory area (e.g., the second area), the editing module 610 may store mask information (e.g., 2 bits) indicating a pixel-based editing function (e.g., a blending method), instead of alpha information for the RGB frames, in a memory space (e.g., 2 bits) allocated for alpha information per pixel in the memory area. The mask information may indicate an editing function (e.g., filtering and/or masking) to be applied to each pixel.

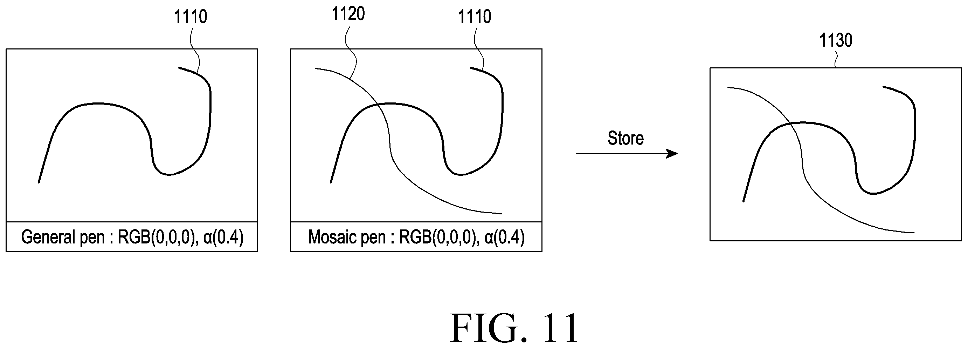

Embodiments related to video editing using the mask information will be described with reference to FIG. 11 to FIG. 15.

The alpha map management module 620 may store and/or manage one or more alpha maps applicable to each frame (e.g., the input HDR image 605 or an RGB frame including at least one edit object) that is input for video editing in the memory (e.g., the memory 230 of FIG. 2), and may determine an alpha map to be applied to a current frame to be edited (e.g., the input HDR image 605 or the RGB frame including the at least one editing object). In an embodiment, the alpha map may include alpha information (e.g., an alpha value per pixel) applicable to a plurality of pixels forming the RGB frame. In an embodiment, the alpha value per pixel included in the alpha map may include 8 bits.

The alpha map management module 620 may manage one or more alpha maps available for alpha blending of the original image to be edited (e.g., the input HDR image 605) and the RGB frame including the at least one edit object, and may determine generation and reuse of the alpha maps. In an embodiment, the alpha map management module 620 may transmit an alpha map to be applied to the current frame to be edited (e.g., the input HDR image 605 or the RGB frame including the at least one edit object) to the frame color blending module 630.

In an embodiment, an operation of the alpha map management module 620 transmitting the alpha map to the frame color blending module 630 may include an operation of providing the frame color blending module 630 with information (e.g., a pointer) indicating an address of a memory area (e.g., a first area) in which the alpha map is stored. In an embodiment, the alpha map management module 620 may store at least one alpha map in the specified memory area (e.g., the first area) allocated to be used for video editing, and may transmit a pointer indicating an address of the at least one alpha map to the frame color blending module 630 when determining that the at least one alpha map is required according to a video editing operation of the editing module 610.

When alpha blending of input frames (e.g., the input HDR image 605 and the RGB frame including the at least one editing object) is required, the frame color blending module 630 may perform alpha blending by using at least one alpha map provided from the alpha map management module 620. In an embodiment, the frame color blending module 630 may obtain at least one alpha map corresponding to the input frames from the memory area (e.g., the first area) of the address corresponding to the pointer provided from the alpha map management module 620. Alpha information updated through alpha blending may be stored (e.g., overwritten) again in the memory area (e.g., the first area) by the frame color blending module 630.

The alpha map management module 620 may provide the alpha map (e.g., the pointer indicating the address of the first area in which the alpha map is stored) back to the frame color blending module 630 when necessary for video editing of other input frames. The frame color blending module 630 may use an 8-bit alpha map per pixel provided from the alpha map management module 620, thereby performing improved alpha blending without significantly increasing memory usage compared to a case of using 2-bit alpha information per pixel for the RGBA 1010102 type.

The mask analysis module 625 may identify mask information (e.g., 2 bits) stored together with an RGB frame including an edit object. The mask information may indicate a pixel-based editing function (e.g., a blending method) for the RGB frame. The mask analysis module 625 may forward the mask information to the frame color blending module 630, and the frame color blending module 630 may determine a blending method per pixel, based on the mask information.

The frame color blending module 630 may perform blending and/or rendering, based on the alpha map read from the memory area of the address corresponding to the pointer provided from the alpha map management module 620 and the information about the pixel-based editing function (e.g., the 2-bit mask information) provided by the mask analysis module 625 together with the input frames (e.g., the input HDR image 605 or the RGB frame including the at least one editing object), thereby generating an output HDR image 635 (e.g., a frame synthesized from the input frames). The output HDR image 635 may be generated without damaging the video quality of the input HDR image 605.

FIG. 7 illustrates an HDR image frame and alpha information for video editing according to an embodiment.

Referring to FIG. 7, pixel data 702 expressing one pixel of an SDR image (e.g., a 32-bit RGB frame) including at least one edit object may be converted into pixel data 708 (e.g., RGB pixel data) including 10-bit RGB data 704 per color channel by the SDR-HDR conversion module 615. The editing module 610 may generate 2-bit mask information 706 indicating a pixel-based editing function of the pixel data 708, and may include the mask information 706 in the pixel data 708. The pixel data 708 may include the 2-bit mask information 706 instead of alpha information (e.g., a 2-bit alpha value).

The alpha map management module 620 may determine alpha information (e.g., an alpha map) to be applied to video editing of the RGB frame. The alpha map may include alpha values (e.g., 8 bits) per pixel (e.g., an alpha value 710 to be used for alpha blending of the pixel data 708) corresponding to the RGB frame. In an embodiment, when the alpha blending of input frames (e.g., the RGB frame) is required according to an editing function performed by the editing module 610, the alpha map management module 620 may allocate (e.g., store) the alpha map to a specified memory area (e.g., a first area) so that the alpha map may be used for the alpha blending of the RGB frame. In the disclosure, the term "alpha map" should be understood as a form of alpha information including alpha values per pixel, and may also be configured as a table, a list, or various forms not mentioned in the disclosure.

The RGB pixel data 708 (e.g., the RGB data 704 and the mask information 706) occupies 32 bits the same as the SDR pixel data 702, and when the alpha blending of the RGB frame is required, the alpha map management module 620 may forward the alpha map (e.g., the alpha value 710) to the frame color blending module 630. The alpha map may be updated through the alpha blending of the RGB frame. In an embodiment, the alpha map management module 620 may forward a pointer indicating the memory area (e.g., the first area) in which the alpha map is stored to the frame color blending module 630. The alpha map management module 620 may retain the alpha map without removing the alpha map from the first area after the alpha blending of the RGB frame is completed, and the alpha map (e.g., updated alpha values) may be reused for alpha blending of another RGB frame (not shown).

The mask information 706 may indicate a specified editing function (e.g., at least one of mosaic, alpha blending, no alpha blending, source-dependent alpha blending, destination-dependent alpha blending, or linear blending) to be applied to the RGB data 704. In an embodiment, for at least one pixel data (e.g., the RGB data 704) of a frame including at least one pen stroke, the editing module 610 may configure the mask information 706 to a value indicating any one of mosaic, a pen with alpha blending, or a pen without alpha blending. In an embodiment, for at least one pixel data (e.g., the RGB data 704) of a frame including a sticker image, the editing module 610 may configure the mask information 706 to a value indicating any one of source-depend alpha blending (follow source alpha), destination-dependent alpha blending (follow destination alpha), or linear blending.

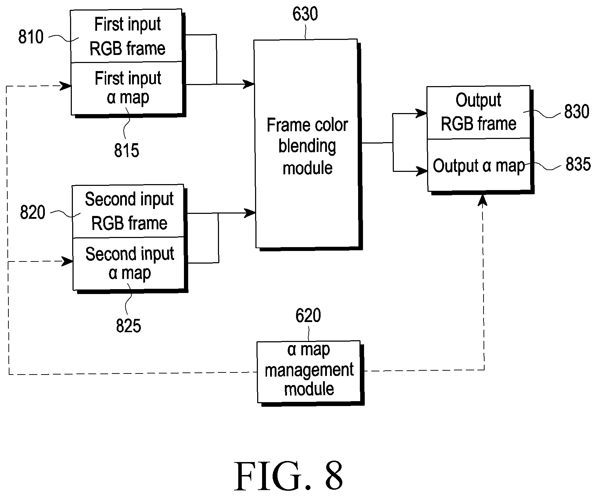

FIG. 8 illustrates frame color blending using an alpha map according to an embodiment.

Referring to FIG. 8, the frame color blending module 630 may receive a first input RGB frame 810 and a second input RGB frame 820. At least one of the first input RGB frame 810 or the second input RGB frame 820 may include an input HDR image (e.g., 10-bit RGB data 704 per color channel), an RGB frame (e.g., the 10-bit RGB data 704 per color channel) corresponding to at least one edit object, or an RGB frame (e.g., the 10-bit RGB data 704 per color channel) generated through blending and being video-edited. At least one of the first input RGB frame 810 or the second input RGB frame 820 may not include alpha information (e.g., alpha values per pixel). At least one of the first input RGB frame 810 or the second input RGB frame 820 may include mask information (e.g., 2 bits per pixel) instead of the alpha information (e.g., the alpha values per pixel).

The alpha map management module 620 may determine that alpha blending of the first input RGB frame 810 and the second input RGB frame 820 is required through control of the editing module 610. For the alpha blending, the alpha map management module 620 may map a first input alpha map 815 (e.g., 8-bit alpha values per pixel) to the first input RGB frame 810 and may map a second input alpha map 825 (e.g., 8-bit alpha values per pixel) to the second input RGB frame 820. In an embodiment, the alpha map management module 620 may store one or more alpha maps available for the alpha blending, or may generate the same when needed. In an embodiment, the alpha map management module 620 may generate at least one of the first input alpha map 815 or the second input alpha map 825, or may obtain one from among the stored alpha maps.

The frame color blending module 630 may alpha-blend the first input RGB frame 810 and the first input alpha map 815 with the second input RGB frame 820 and the second input alpha map 825 to generate an output RGB frame 830 and an output alpha map 835. The alpha map management module 620 may obtain the output alpha map 835, and may store the output alpha map 835 to be reused for alpha blending of the next input frames (not shown).

When the alpha blending of the first input RGB frame 810 and the second input RGB frame 820 is not required, the alpha map management module 620 may not allocate the alpha maps.

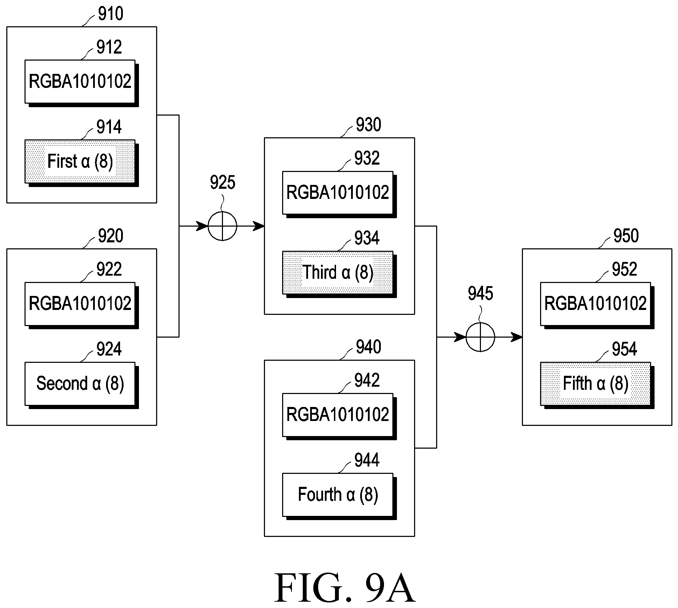

FIG. 9A illustrates alpha blending reusing an alpha map according to an embodiment.

Referring to FIG. 9A, the frame color blending module 630 may perform first alpha blending 925 on the first frame data 910 and the second frame data 920. The first frame data 910 may include an RGB frame 912 (e.g., 10-bit RGB data per color channel) and a first alpha map 914 allocated by the alpha map management module 620, and the second frame data 920 may include an RGB frame 922 (e.g., 10-bit RGB data per color channel) and a second alpha map 924. In an embodiment, the RGB data 912 and the RGB data 922 may be configured in an RGBA1010102 format, but a 2-bit alpha channel ("A") may be empty (e.g., "00"), or may include mask information. In an embodiment, the second alpha map 924 may include alpha information (e.g., alpha values per pixel) allocated by the alpha map management module 620 or generated in previous blending.

The frame color blending module 630 may generate third frame data 930 including RGB data 932 (e.g., 10-bit RGB data per color channel) and a third alpha map 934 through the first alpha blending 925. In an embodiment, the alpha map management module 620 may obtain the third alpha map 934 generated by the first alpha blending 925, and may store the third alpha map 934 generated by the frame color blending module 630 to be used for next alpha blending (e.g., alpha blending 945) instead of the first alpha map 914. In an embodiment, the RGB data 932 and the RGB data 942 may be configured in the RGBA1010102 format, but a 2-bit alpha channel ("A") may be empty (e.g., "00"), or may include mask information.

The frame color blending module 630 may perform second alpha blending 945 on the third frame data 930 and fourth frame data 940. For example, the fourth frame data 940 may include an RGB frame 942 (e.g., 10-bit RGB data per color channel) including at least one edit object and a fourth alpha map 944 allocated by the alpha map management module 620. The frame color blending module 630 may generate fifth frame data 950 including RGB data 952 (e.g., 10-bit RGB data per color channel) and a fifth alpha map 954 through the second alpha blending 945. In an embodiment, the alpha map management module 620 may obtain the fifth alpha map 934 generated by the second alpha blending 945, and may store the fifth alpha map 954 to be used for next alpha blending (not shown) instead of the third alpha map 914. In an embodiment, the RGB data 952 may be configured in the RGBA1010102 format, but a 2-bit alpha channel ("A") may be empty (e.g., "00"), or may include mask information.

As described above, the frame color blending module 630 may perform video editing (e.g., the alpha blending 945) again on the result (e.g., the third frame data 930) of video editing (e.g., the alpha blending 925). The alpha map management module 620 may continuously retain the third alpha map 934 generated as a result of the alpha blending 925, and may deallocate the fifth alpha map 954 when video editing is completed. The alpha map management module 620 may retain alpha information (e.g., the third alpha map 934) reusable for next video editing (e.g., the alpha blending 945), thereby preventing N alpha maps from being generated during N times of video editing (e.g., N times of alpha blending).

Instead of using input frames including 32-bit RGBA data and 8-bit alpha information, the frame color blending module 630 may be allocated and use alpha maps (e.g., the first alpha map 914 and the second alpha map 924) from the alpha map management module 620 only in a situation where alpha blending is required, thereby maintaining the usage of memory (e.g., the memory 230 of FIG. 2) similar to that when using a 32-bit SDR image.

In an embodiment, the alpha map management module 620 may allocate alpha maps (e.g., the first alpha map 914 and the second alpha map 924) for input frames (e.g., the first frame data 912 and the second frame data 922) including foreground image data while foreground editing is performed by the editing module 610. The alpha map management module 620 may not allocate alpha maps for input frames including background image data.

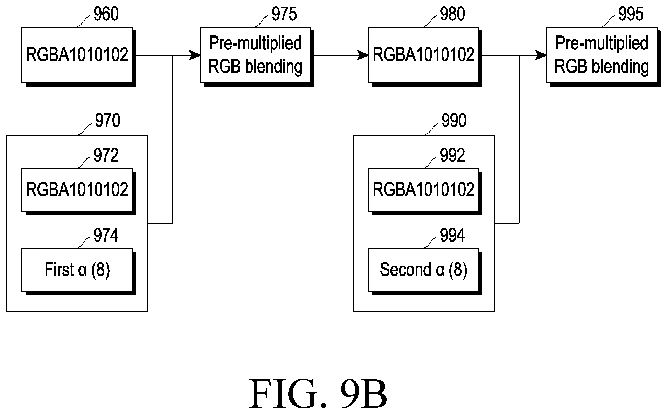

FIG. 9B illustrates pre-multiplied RGB blending according to an embodiment.

Referring to FIG. 9B, the frame color blending module 630 may perform first pre-multiplied RGB blending 975 on first frame data 960 and second frame data 970. The first frame data 960 may include an RGB frame (e.g., 10-bit RGB data per color channel) without alpha information. The second frame data 970 may include an RGB frame 972 (e.g., 10-bit RGB data per color channel) and a first alpha map 974 allocated by the alpha map management module 620. In an embodiment, the first frame data 960 may include one RGB frame of an input HDR image (e.g., the input HDR image 605) or an image including an edit object. In an embodiment, the first frame data 960 may include one RGB frame representing a background image of an edit object, and the alpha map management module 620 may not allocate alpha information for the first frame data 960. In an embodiment, the first frame data 950 or the RGB frame 972 may be configured in an RGBA1010102 format, but a 2-bit alpha channel ("A") may be empty (e.g., "00"), or may include mask information.

In an embodiment, the first frame data 960 may include an input HDR image, and may be generated by the decoder 520 that decodes original media data (e.g., a video file) and stored in one of a plurality of frame buffers forming a ring buffer. The alpha map management module 620 may not allocate alpha information for the first frame data 960, and the memory usage of the first frame data 960 may be similar to that in SDR video editing.

The frame color blending module 630 may generate third frame data 980 by performing the first pre-multiplied RGB blending 975 on the first frame data 960 and the second frame data 970. The third frame data 980 may not include alpha information due to the pre-multiplied RGB blending, and RGB data of the third frame data 980 may be pre-multiplied by alpha information (e.g., alpha values per pixel) of the first alpha map 974 allocated to the second frame data 970 by the alpha map management module 620. In an embodiment, the third frame data 980 or RGB frame 992 may be configured in the RGBA1010102 format, but a 2-bit alpha channel ("A") may be empty (e.g., "00"), or may include mask information.

The frame color blending module 630 may perform second pre-multiplied RGB blending 995 on the third frame data 980 and fourth frame data 990. As described above, the third frame data 980 may be generated by the first pre-multiplied RGB blending 975, and may not include alpha information. The fourth frame data 990 may include the RGB frame 992 (e.g., 10-bit RGB data per color channel) and a second alpha map 994 allocated by the alpha map management module 620.

As illustrated in FIG. 9A, when alpha information is required in subsequent video editing (e.g., the second alpha blending 945 or subsequent blending (not shown)), the frame color blending module 630 may perform alpha blending (e.g., the first alpha blending 925 or the second alpha blending 945) to generate output frame data (e.g., the third frame data 930 or the fifth frame data 950) including alpha information (e.g., the third alpha map 934 or the fifth alpha map 954). However, as illustrated in FIG. 9B, when alpha information is not required in subsequent video editing (e.g., the second pre-multiplied RGB blending 995 or subsequent blending (not shown)), the frame color blending module 630 may perform pre-multiplied RGB blending (e.g., the first pre-multiplied RGB blending 975 or the second pre-multiplied RGB blending 995) to generate output frame data (e.g., the third frame data 980) not including separate alpha information (e.g., including pixel data pre-multiplied by alpha values).

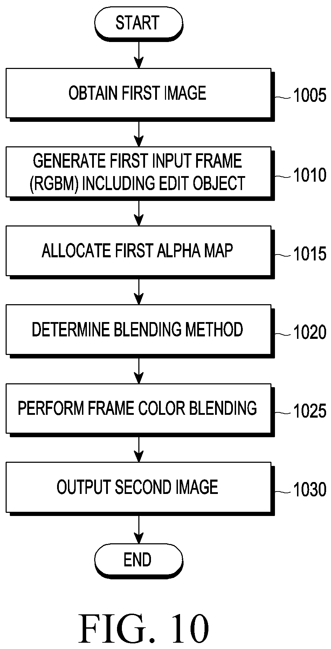

FIG. 10 is a flowchart illustrating a video editing procedure according to an embodiment.

Referring to FIG. 10, in operation 1005, the electronic device 200 (e.g., the processor 210) may obtain a first image to be edited (e.g., the input HDR image 605). In an embodiment, the first image may be read from memory (e.g., the memory 230 or external memory (not shown)), recorded by a camera (not shown), or received from an external electronic device (not shown) to the electronic device 210.

In operation 1010, the electronic device 200 (e.g., the processor 210) may generate a first input frame (e.g., an SDR image) to be blended with the first image. In an embodiment, the first input frame may include one or more objects to be used for editing (hereinafter, referred to as edit objects) through editing functions provided for video editing. For example, the one or more edit objects may include a doodle image (e.g., a pen stroke) or a sticker image. In an embodiment, the first input frame may include 8-bit pixel data per color channel (e.g., the pixel data 702).

In an embodiment, each pixel data of the first input frame may include RGB data together with mask information indicating a blending method for the pixel data instead of an alpha value. A frame format including mask information instead of an alpha value for each pixel may be referred to as RGBM. In an embodiment, the electronic device 200 (e.g., processor 210) may generate mask information (e.g., the 2-bit mask information 706) for each pixel of the first input frame and include the mask information in the first input frame while generating the first input frame.

In an embodiment, the mask information may indicate a blending method based on an editing function (e.g., a doodle or a sticker) corresponding to the first input frame, such as at least one of mosaic, alpha blending, or no alpha blending, or may be configured to a value indicating at least one of source-dependent alpha blending, destination-dependent alpha blending, or linear blending. In an embodiment, the electronic device 200 may generate 30-bit RGB data and the 2-bit mask information for each pixel of the first input frame.

In an embodiment, when the first input frame including the mask information has an SDR format, the electronic device 200 (e.g., the processor 210) may convert the first input frame into an HDR format. The first input frame converted into the HDR format may include RGB data (e.g., the RGB data 704) including 10 bits per color channel. The electronic device 200 (e.g., the processor 210) may include the RGB data 704 and the mask information 706 in each pixel data (e.g., the pixel data 708) of the first input frame converted into the HDR format.

In operation 1015, the electronic device 200 (e.g., the processor 210) may allocate an alpha map (e.g., a first alpha map) including alpha values per pixel for the first input frame. In an embodiment, the electronic device 200 (e.g., the processor 210) may determine whether alpha blending of the first input frame is required according to an editing function according to a user input. In an embodiment, when an edit object included in the first input frame includes a doodle image or a sticker image, the electronic device 200 (e.g., the processor 210) may determine that alpha blending of the first input frame is required. In an embodiment, when the first input frame includes a background image, the electronic device 200 (e.g., the processor 210) may determine that the alpha blending is required. When determining that the alpha blending is not required, operation 1015 may be omitted, and the electronic device 200 (e.g., the processor 210) may not allocate the first alpha map. However, when the alpha blending is required, the electronic device 200 (e.g., the processor 210) may allocate the first alpha map in operation 1015.

In an embodiment, the electronic device 200 (e.g., the processor 210) may identify the allocated first alpha map without modifying each pixel data (e.g., the RGB data and the mask information) of the first input frame.

In operation 1020, the electronic device 200 (e.g., the processor 210) may determine a blending method to be applied to the first input frame, based on the mask information 706 included in each pixel data (e.g., the pixel data 708) of the first input frame. In an embodiment, the electronic device 200 (e.g., the processor 210) may determine the blending method (e.g., alpha blending, doodle blending, or sticker blending) indicating a frame color blending type, based on analysis of the mask information 706.

In operation 1025, the electronic device 200 (e.g., the processor 210) may perform frame color blending on the first input frame, based on the analysis of the mask information 706. In the frame color blending, the electronic device 200 (e.g., the processor 210) may blend the first input frame with the first image or a frame generated in previous blending. In an embodiment, the first input frame may be a source frame of the frame color blending, and the first image or the frame generated in the previous blending may be a destination frame (e.g., a second input frame) of the frame color blending.

In an embodiment, the frame color blending may include at least one of pre-multiplied RGB blending (e.g., the pre-multiplied RGB blending 975 or 995), alpha blending (e.g., the alpha blending 925 or 945), doodle blending, or sticker blending. In an embodiment, the frame color blending may include alpha blending, and the electronic device 200 (e.g., the processor 210) may store a second alpha map (e.g., the alpha map 934 or 954) generated through the alpha blending to be used in subsequent video editing. In an embodiment, instead of allocating a new memory area for storing the second alpha map, the electronic device 200 (e.g., the processor 210) may update (e.g., replace or overwrite) the first alpha map allocated in operation 1030 to the first alpha map.

In an embodiment, the frame color blending of operation 1025 may include one or more times of blending.

In operation 1030, the electronic device 200 (e.g., the processor 210) may generate a second image (e.g., an output HDR image) including an output frame resulting from completion of the frame color blending. In an embodiment, the second image may include a frame generated through the frame color blending in operation 1025.

FIG. 11 illustrates an edit object generated through a pen input function according to an embodiment.

Referring to FIG. 11, the editing module 610 may generate a first pen stroke 1110 corresponding to a pen input of a user. In an embodiment, each pixel data of the first pen stroke 1110 may include RGB = (0, 0, 0) and alpha = 0.4. The editing module 610 may receive a second pen stroke 1120 from the user. In an embodiment, each pixel data of the second pen stroke 1120 may include RGB = (0, 0, 0) and alpha = 0.4.

In an embodiment, the first pen stroke 1110 may be input through a general pen function provided by the editing module 610, and the second pen stroke 1120 may be input through a mosaic pen function provided by the editing module 610. The editing module 610 may store a third pen stroke 1130 in which the first pen stroke 1110 and the second pen stroke 1120 are combined to reduce memory usage instead of storing the first pen stroke 1110 input through the general pen function and the second pen stroke 1120 input through the mosaic pen function.

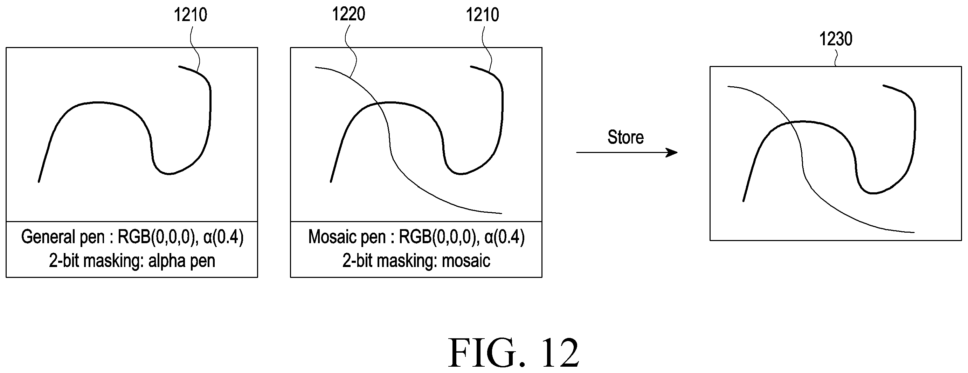

FIG. 12 illustrates an edit object image including pixel-based mask information according to an embodiment.

Referring to FIG. 12, the editing module 610 may generate a first pen stroke 1210 corresponding to a pen input from a user through a general pen function. In an embodiment, each pixel data of the first pen stroke 1210 may include RGB = (0, 0, 0) and 2-bit masking = [pen with Alpha]. In an embodiment, the editing module 610 may not include alpha information (e.g., alpha = 0.4) in each pixel data of the first pen stroke 1210. In an embodiment, the editing module 610 may request the alpha map management module 620 to allocate an alpha map corresponding to alpha = 0.4. The alpha map management module 620 may allocate the alpha map for an input frame including the first pen stroke 1210, based on the request and/or 2-bit masking = [pen with Alpha], and may report the allocated alpha map to the frame color blending module 630.

The editing module 610 may receive a second pen stroke 1220 from a user through a mosaic pen function. In an embodiment, each pixel data of the second pen stroke 1220 may include RGB = (0, 0, 0) and 2-bit masking = [Mosaic]. In an embodiment, the editing module 610 may not include alpha information (e.g., alpha = 0.4) in each pixel data of the second pen stroke 1210.

The editing module 610 may store a third pen stroke 1230 in which the first pen stroke 1210 and the second pen stroke 1220 are combined. The editing module 610 may include mask information (e.g., [Mosaic], [pen with Alpha], or [pen without Alpha]) in each pixel data of the third pen stroke 1230.

The mask analysis module 625 may obtain the mask information (e.g., [Mosaic], [pen with Alpha], or [pen without Alpha]) included in each pixel data of the third pen stroke 1230. The mask information may indicate whether each pixel data is from a normal pen stroke (e.g., the first pen stroke 1210) or a mosaic pen stroke (e.g., the second pen stroke 1220). The mask analysis module 625 may report the obtained 2-bit mask information to the frame color blending module 630. The frame color blending module 630 may perform frame color blending (e.g., doodle blending) on each pixel data of the third pen stroke 1330, based on the mask information.

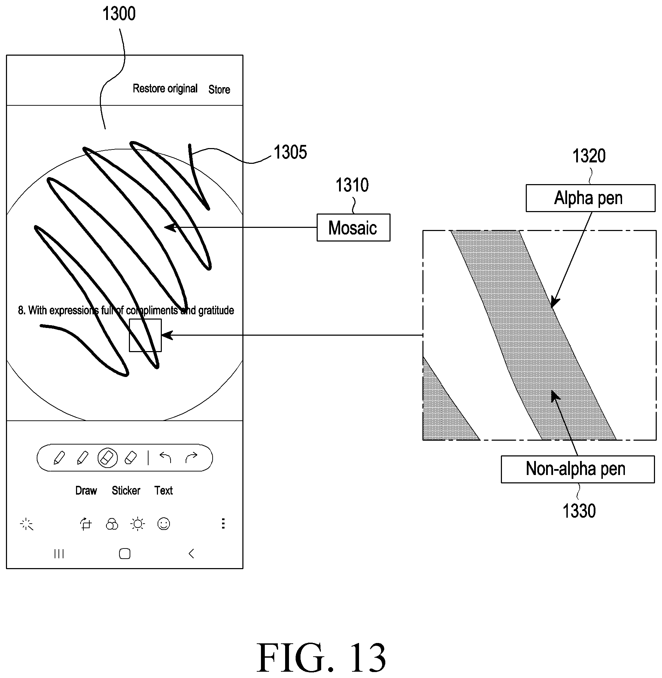

FIG. 13 illustrates a pen stroke including a mosaic pen according to an embodiment.

FIG. 13 shows an image 1300 (e.g., an input frame) including at least one pen stroke 1305. First pixel data 1310 of the image 1300 may include RGB data (e.g., 10 bits per color channel) and mask information (e.g., 2 bits) indicating a mosaic pen (e.g., [Mosaic]). Second pixel data 1320 of the image 1300 may include RGB data (e.g., 10 bits per color channel) and mask information (e.g., 2 bits) indicating an alpha-based pen (e.g., [Pen with Alpha]). Third pixel data 1330 of the image 1300 may include RGB data (e.g., 10 bits per color channel) and mask information (e.g., 2 bits) indicating a non-alpha-based pen (e.g., [Pen without Alpha]).

The mask analysis module 625 may obtain mask information included in each pixel data (e.g., the first pixel data 1310, the second pixel data 1320, or the third pixel data 1330) of the input image 1300, and may report the obtained mask information to the frame color blending module 630. The frame color blending module 630 may perform blending (e.g., doodle blending) on the input image 1300, based on the mask information.

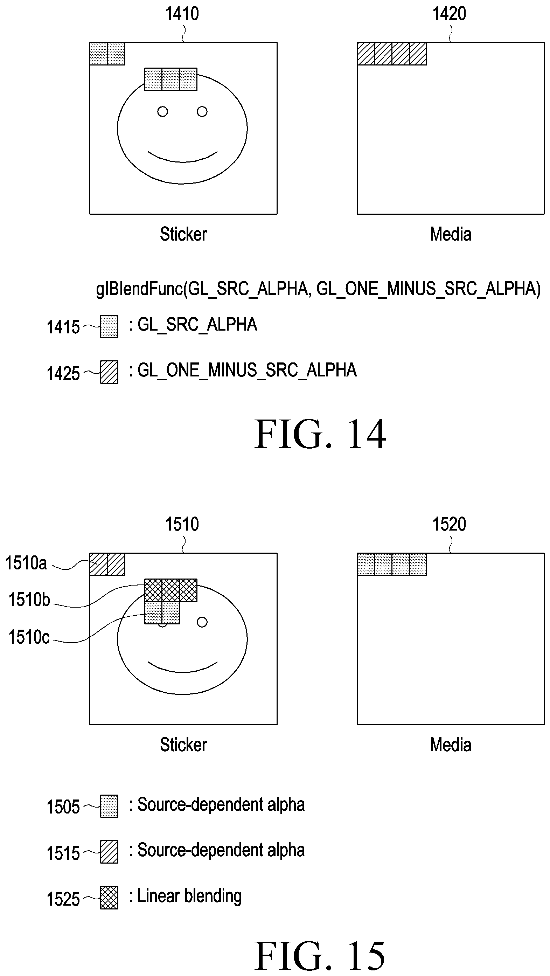

FIG. 14 illustrates sticker blending not using mask information according to an embodiment.

Referring to FIG. 14, the frame color blending module 630 may blend a sticker image 1410 (e.g., an input frame) generated by the editing module 610 by pixel. Each pixel data of the sticker image 1410 may include a 2-bit alpha value GL_SRC_ALPHA 1415 per pixel. The frame color blending module 630 may determine alpha information for each pixel data of a destination image 1420 (e.g., an input HDR image 605) as GL_ONE_MINUS_SRC_ALPHA 1425 (e.g., 1-GL_SRC_ALPHA), based on the alpha value GL_SRC_ALPHA 1415 for each pixel data of the sticker image 1410. The frame color blending module 630 may perform sticker blending (e.g., linear blending, source-dependent blending, or destination-dependent blending) on all entire pixel data of the sticker image 1410 and the destination image 1420 by commonly using GL_SRC_ALPHA 1415 and GL_ONE_MINUS_SRC_ALPHA 1425.

FIG. 15 illustrates sticker blending using mask information according to an embodiment.

Referring to FIG. 15, the frame color blending module 630 may blend a sticker image 1510 generated by the editing module 610 by pixel. Each pixel data of the sticker image 1510 may include 2-bit mask information for distinguishing a blending method per pixel instead of alpha information (e.g., a 2-bit alpha value per pixel). For example, first pixel data 1510a corresponding to a background may include mask information indicating destination-dependent alpha blending [Follow Destination Alpha] 1515. For example, second pixel data 1510b corresponding to the boundary between an edit object (e.g., a sticker) and the background may include mask information indicating linear blending [Linear Blending] 1525. For example, the third pixel data 1510c corresponding to the edit object may include mask information indicating source-dependent alpha blending [Follow Source Alpha] 1505.

The mask analysis module 625 may obtain mask information about each pixel data (e.g., pixel data 1510a, 1510b, or 1510c). The frame color blending module 630 may determine a blending method (e.g., source-dependent alpha blending, destination-dependent alpha blending, or linear blending) for each pixel data of the sticker image 1510, based on the mask information. The frame color blending module 630 may perform sticker blending (e.g., source-dependent alpha blending, destination-dependent alpha blending, or linear blending) on each pixel data of the sticker image 1510 and the destination image 1520, based on the mask information provided from the mask analysis module 625 and, when necessary, an alpha map allocated to each pixel.

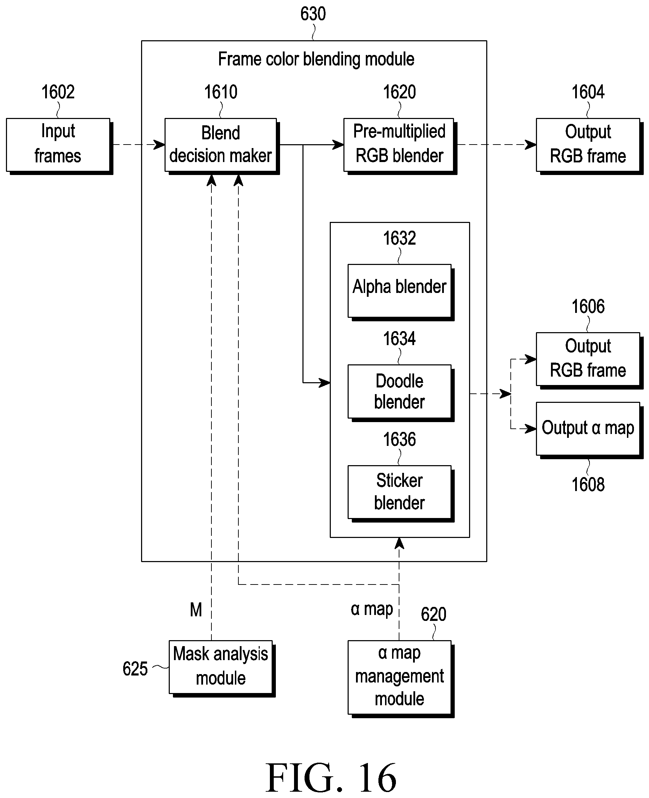

FIG. 16 illustrates frame color blending based on an alpha map and mask information according to an embodiment.

Referring to FIG. 16, the frame color blending module 630 may include a blend decision maker 1610, one or more blenders (e.g., at least one of a pre-multiplied RGB blender 1620, an alpha blender 1632, a doodle blender 1634, or a sticker blender 1636.

The blend decision maker 1610 of the frame color blending module 630 may determine a blending type (e.g., at least one of pre-multiplied RGB blending, alpha blending, doodle blending, or sticker blending) to be applied to input frames 1602 (e.g., at least one of the input HDR image 605 or the RGB frame including at least one edit object), based on mask information M transmitted from the mask analysis module 625 and an alpha map transmitted from the alpha map management module 620. The blend decision maker 1610 may forward the input frames 1602 to one of the pre-multiplied RGB blender 1620, the alpha blender 1632, the doodle blender 1634, or the sticker blender 1636 according to a determination result.

In an embodiment, at least one of the input frames 1602 may include each pixel data including mask information, and the blend decision maker 1610 may determine whether a pixel-based editing function is required, based on the mask information transmitted from the mask analysis module 625. In an embodiment, when the mask information included in the input frames 1602 indicates a pen-related mask (e.g., [Mosaic, pen with Alpha, or pen without Alpha]), the blend decision maker 1610 may select the doodle blender 1634. In an embodiment, when the mask information included in the input frames 1602 indicates a sticker-related mask (e.g., [Follow Source Alpha, Follow Destination Alpha, or Linear Blend]), the blend decision maker 1610 may select the sticker blender 1636.

The blend decision maker 1610 may identify a blending type to be used for blending of each pixel data, based on information (e.g., the mask information and alpha maps) obtained from the mask analysis module 625 and the alpha map management module 620, and may forward each pixel data of the input frames 1602 to a corresponding blender (e.g., the pre-multiplied RGB blender 1620, the alpha blender 1632, the doodle blender 1634, or the sticker blender 1636). In an embodiment, the blend decision maker 1610 may forward each pixel data of input frames 1602 including a doodle image or a sticker image to the doodle blender 1634 or the sticker blender 1636, respectively.

The blend decision maker 1610 may forward input frames 1602 including an image other than the doodle image or the sticker image to the pre-multiplied RGB blender 1620 or the alpha blender 1632. In an embodiment, when at least one alpha map allocated to the input frames 1602 is allocated by the alpha map management module 620 and additional blending is required for a blended output, the blend decision maker 1610 may forward the input frames 1602 to the alpha blender 1632. In an embodiment, when additional blending is required for the blended output, the blend decision maker 1610 may forward the input frames 1602 to the pre-multiplied RGB blender 1620.

The pre-multiplied RGB blender 1620 may be used when the blended output (e.g., an output RGB frame 1604) no longer needs alpha blending. The pre-multiplied RGB blender 1620 may perform blending by pre-multiplying each pixel data of the input frames 1602 by alpha information (e.g., each alpha value of the alpha map allocated by the alpha map management module 620). A blended output (e.g., the frame data 980) from the pre-multiplied RGB blender 1620 may include only RGB data without alpha information. Using the pre-multiplied RGB blender 1620 makes it possible to reduce processing time required for alpha blending (e.g., the alpha blender 1632) and to generate RGB data multiplied by alpha information.

Table 1 below shows a basic logic of pre-multiplied blending according to an embodiment.

DestinationRGB = SourceRGB * SourceAlpha; DestinationAlpha = 1.0 glBlendFunc(GL_ONE, GL_ONE)

Here, DestinationRGB may denote each pixel data of a blended output generated by the pre-multiplied RGB blender 1620, SourceRGB may denote each pixel data of an input frame (e.g., one of the input frames 1602), and SourceAlpha may denote an alpha value per pixel allocated to the input frame. glBlendFunc(GL_ONE, GL_ONE) may denote a logic function of pre-multiplied blending. DestinationAlpha, which denotes the alpha value of the blended output, may be 1.0.

Referring to Table 1, the pre-multiplied RGB blender 1610 may multiply input RGB data (e.g., SourceRGB) by alpha information (e.g., SourceAlpha) to generate output RGB data (e.g., DestinationRGB), and output alpha information may always be configured to 1.0. The alpha map management module 620 does not need to obtain alpha information from the pre-multiplied RGB blender 1610.

Table 2 below shows a basic logic of alpha blending by the alpha blender 1632.

[Table 2]

Final RGB = 1st Input RGB * alpha + 2nd Input RGB * (1.0 - alpha);
Final Alpha = 1st Input Alpha * alpha + 2nd Input Alpha * (1.0 - alpha);

Here, FinalRGB may denote each pixel data of a blended output generated from the alpha blender 1632. FinalAlpha may denote alpha information (e.g., an alpha value per pixel) generated by the alpha blender 1632, 1st InputRGB may denote pixel data of a first input frame among input frames, and 2nd InputRGB may denote pixel data of a second input frame. In an embodiment, the first input frame may be a source frame and the second input frame may be a destination frame. "alpha" may denote an alpha value input from a user to the editing module 610, and 1st InputAlpha and 2nd InputAlpha may denote alpha values per pixel obtained from alpha maps respectively allocated to the first input frame and the second input frame.

The alpha blender 1632 may generate alpha information (e.g., FinalAlpha) about an output frame, based on the alpha maps (e.g. 1st InputAlpha and 2nd InputAlpha) of the input frames. The alpha blender 1632 may output blended output RGB data (e.g., FinalRGB) and corresponding alpha information (e.g., FinalAlpha), and the alpha information (e.g., FinalAlpha) may be used in subsequent video editing (e.g., alpha blending).

Table 3 below shows a basic logic of doodle blending according to an embodiment.

[Table 3]

```
Vec4 inputColor;

...

int mask = floor(inputColor.a * 4.0);
```

```
        if(mask == MOSAIC)

        {

        drawMosaic(backgroundTexture);

        }

        else if(mask == PEN_WITH_ALPHA)

        {

        drawPen(inputRGB, inputAlpha);

        }

        else if(mask == PEN_WITHOUT_ALPHA)

        {

        drawPen(inputRGB, 1.0);

        }

        else

        {

        discard;

        }
}
```

Here, inputColor may denote each pixel data of an input frame (e.g., the first input frame among the input frames 1602) including a doodle image, and inputAlpha may denote an alpha value per pixel of an alpha map allocated by the alpha map management module 620 for the first input frame. "mask" may denote mask information obtained from the last 2 bits (e.g., inputColor.a) corresponding to alpha information among each pixel data of the first input frame.

For example, when "mask" of first pixel data indicates a mosaic pen (e.g., "MOSAIC"), the doodle blender 1634 may execute a drawMosaic function, which denotes doodle blending of a mosaic pen type, on backgroundTexture indicating one pixel data of a background image (e.g., a second input frame among the input frames 1602). For example, when "mask" of second pixel data indicates an alpha-based pen (e.g., "PEN_WITH_ALPHA"), the doodle blender 1634 may execute a drawPen function, which denotes doodle blending, based on the second pixel data (e.g., inputRGB) of inputColor and inputAlpha. Here, inputAlpha may denote an alpha value per pixel of an alpha map allocated by the alpha map management module 620. For example, when "mask" of third pixel data indicates a non-alpha-based pen (e.g., "PEN_WITHOUT_ALPHA"), the doodle blender 1634 may execute the drawPen function, based on the third pixel data (e.g., inputRGB) of inputColor and a specified alpha value (e.g., 1.0).

Table 4 below shows a basic logic of sticker blending according to an embodiment.

[Table 4]

```
vec4 inputColor;

float inputAlpha;

vec4 blendColor;

float blendAlpha;

...

int mask = floor(inputColor.a * 4.0);

if(mask == SOURCE_BLEND)

{

outColor = vec4(inputColor.rgb + (blendColor.rgb * blendAlpha) /
(inputAlpha, inputColor.a);

outAlpha = inputAlpha;

}

else if(mask == DESTINATION_BLEND)

{

outColor = vec4(blendColor.rgb + (inputColor.rgb * inputAlpha) /
blendAlpha, inputColor.a);

outAlpha = blendAlpha;

}

else //(mask == LINEAR_BLEND)

{

outColor = vec4(blendColor.rgb * inputAlpha + blendColor.rgb * (1.0
- inputAlpha), inputColor.a);

outAlpha = clamp(inputAlpha * inputAlpha + blendAlpha * (1.0 -
inputAlpha), 0.0, 1.0;

}
```

Here, inputColor may denote each pixel data of an input frame (e.g., the first input frame among the input frames 1602) including a sticker image (e.g., a source image), and inputAlpha may denote an alpha value per pixel of an alpha map allocated by the alpha map management module 620 for the first input frame. blendColor may denote each pixel data of a destination image (e.g., the second input frame among the input frames 1602) to which the sticker image is added, and blendAlpha may denote an alpha value per pixel of an alpha map allocated by the alpha map management module 620 for the second input frame. "mask" may denote mask information obtained from the last 2 bits (e.g., inputColor.a) corresponding to alpha information among each pixel data of the first input frame.

For example, when "mask" of first pixel data indicates source-dependent alpha blending (e.g., SOURCE_BLEND), the sticker blender 1636 may calculate output pixel data (e.g., outColor), based on the first pixel data (e.g., inputColor.rgb), inputAlpha, and pixel data (e.g., blendColor.rgb) and blendAlpha of the second input frame. The alpha value (outAlpha) of the output pixel data may be determined as inputAlpha. For example, when "mask" of second pixel data indicates destination-dependent alpha blending (e.g., DESTINATION_BLEND), the sticker blender 1636 may calculate output pixel data (e.g., outColor), based on the second pixel data (e.g., inputColor.rgb), inputAlpha, and the pixel data (e.g., blendColor.rgb) and blendAlpha of the second input frame. The alpha value (outAlpha) of the output pixel data may be determined by blendAlpha. For example, when "mask" of third pixel data indicates linear blending (e.g., LINEAR_BLEND), the sticker blender 1636 may calculate output pixel data (e.g., outColor), based on the third pixel data (e.g., inputColor.rgb), inputAlpha, and the pixel data (e.g., blendColor.rgb) of the second input frame. The alpha value (outAlpha) of the output pixel data may be calculated based on inputAlpha and blendAlpha.

In an embodiment, the sticker blender 1636 may select which of alpha information about the source image (e.g., inputAlpha) or alpha information about the destination image (e.g., blendAlpha) is output as outAlpha according to the mask information (e.g., "mask"), or may calculate output alpha information (e.g., outAlpha) by applying linear blending. The alpha map management module 620 may replace the alpha information about the source image (e.g., the alpha map allocated to the first input frame) with the output alpha information (e.g., outAlpha).

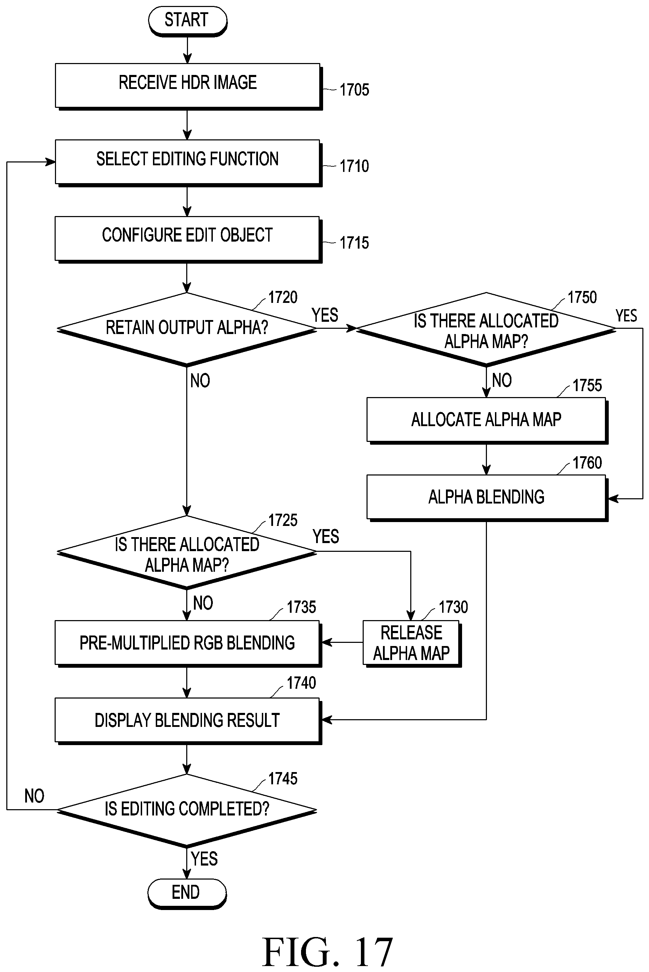

FIG. 17 is a flowchart illustrating a video editing procedure using an alpha map according to an embodiment. According to an embodiment, at least one of the following operations may be executed by the processor 210 of the electronic device 200. According to embodiments, at least one of the following operations may be omitted, modified, or changed in order.

Referring to FIG. 17, in operation 1705, the electronic device 200 (e.g., the processor 210) may receive an HDR image (e.g., at least one frame). In operation 1710, the electronic device 200 (e.g., the processor 210) may select an editing function. In an embodiment, the editing function may include a doodle and/or a sticker. In operation 1715, the electronic device 200 (e.g., the processor 210) may generate an image (e.g., an input frame) including an edit object according to the selected editing function. In an embodiment, the edit object may be generated through an editing function other than a doodle or a sticker. In an embodiment, the image including the edit object may include RGB data (e.g., the 10-bit RGB data 704 per pixel) and mask information (e.g., the mask information 706).

In operation 1720, the electronic device 200 (e.g., the processor 210) may determine whether to retain output alpha information after blending. In an embodiment, when an output image needs blending or displaying again after the blending (e.g., blending 1735 or blending 1760), the electronic device 200 (e.g., the processor 210) may determine to retain the output alpha information. In an embodiment, when video editing is completed and the output image does not need storing after the blending (e.g., the blending 1735 or the blending 1760), the electronic device 200 (e.g., the processor 210) may determine that there is no need to retain the output alpha information. When the output alpha information needs retaining, the electronic device 200 (e.g., the processor 210) may proceed to operation 1750 to perform alpha blending. When the output alpha information does not need retaining, the electronic device 200 (e.g., the processor 210) may proceed to operation 1725 to perform pre-multiplied RGB blending.

In operation 1750, the electronic device 200 (e.g., the processor 210) may determine whether an alpha map is allocated to be used for the alpha blending. In an embodiment, the electronic device 200 (e.g., the processor 210) may determine whether at least one alpha map is stored in a specified memory area (e.g., a first area) for use in the alpha blending. When the at least one alpha map is allocated (e.g., stored in the first area), the electronic device 200 (e.g., the processor 210) may proceed to operation 1760. When no alpha map is allocated (e.g., no alpha map is stored in the first area), the electronic device 200 (e.g., the processor 210) may proceed to operation 1755.

In operation 1755, the electronic device 200 (e.g., the processor 210) may allocate an alpha map for the input frame including the edit object. In operation 1760, the electronic device 200 (e.g., the processor 210) may perform the alpha blending on the input frame including the edit object and the HDR image, based on alpha values per pixel of the allocated alpha map.

In operation 1725, the electronic device 200 (e.g., the processor 210) may determine whether the alpha map to be used for the alpha blending is allocated. In an embodiment, the electronic device 200 (e.g., the processor 210) may determine whether the at least one alpha map is stored in the specified memory area (e.g., the first area) for use in the alpha blending. When the at least one alpha map is allocated (e.g., stored in the first area), the electronic device 200 (e.g., the processor 210) may proceed to operation 1730. When no alpha map is allocated (e.g., no alpha map is stored in the first area), the electronic device 200 (e.g., the processor 210) may proceed to operation 1735.

In operation 1730, the electronic device 200 (e.g., the processor 210) may release (e.g., delete from the first area) the allocated alpha map. In operation 1735, the electronic device 200 (e.g., the processor 210) may perform pre-multiplied RGB blending on the input frame including the edit object and the HDR image.

After operation 1760 or operation 1735, the electronic device 200 (e.g., the processor 210) may display an output image (e.g., an output frame) generated as a result of the blending (e.g., the alpha blending or pre-multiplied RGB blending).

In operation 1745, the electronic device 200 (e.g., the processor 210) may determine whether the video editing of the HDR image is completed. In an embodiment, the electronic device 200 (e.g., the processor 210) may determine whether the video editing of each frame of the HDR image is completed. When the editing is completed, the electronic device 200 (e.g., the processor 210) may terminate the procedure. When additional video editing is required, the electronic device 200 (e.g., the processor 210) may return to operation 1710.

According to the foregoing procedure, the electronic device 200 (e.g., the processor 210) may repeatedly allocate, reuse, and deallocate alpha maps, thereby maintaining a memory area (e.g., a second area) in which the alpha maps are stored. The electronic device 200 (e.g., the processor 210) may retain alpha maps having 8 bits per pixel in the second area, thus reducing memory usage (e.g., memory read operations) while performing repeated blending.

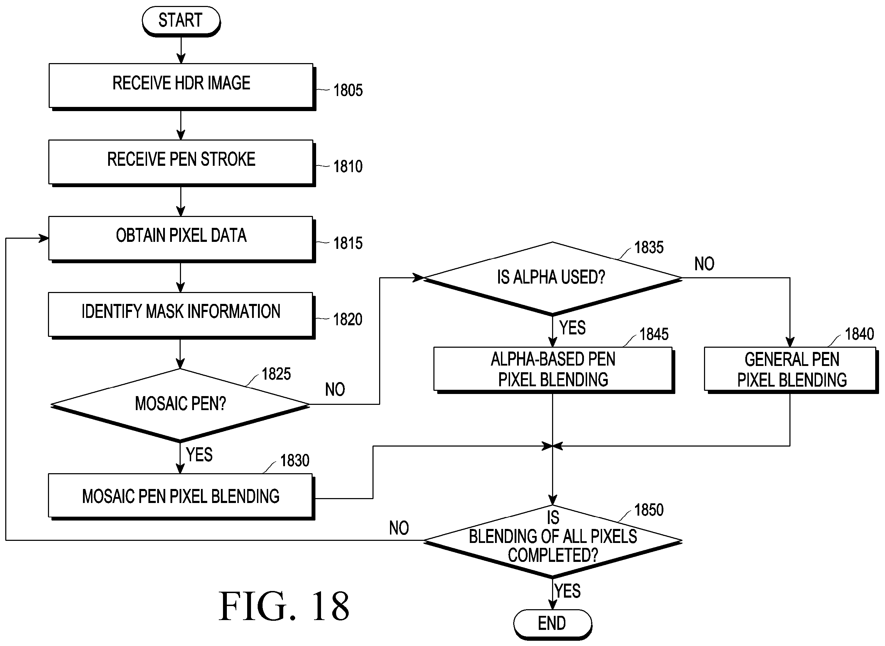

FIG. 18 is a flowchart illustrating a doodle blending procedure using mask information according to an embodiment. According to an embodiment, at least one of the following operations may be executed by the processor 210 of the electronic device 200. According to embodiments, at least one of the following operations may be omitted, modified, or changed in order.

Referring to FIG. 18, in operation 1805, the electronic device 200 (e.g., the processor 210) may receive an HDR image (e.g., at least one frame). In operation 1810, the electronic device 200 (e.g., the processor 210) may generate an image (e.g., an input frame) including a pen stroke (e.g., the pen stroke 1230), based on a user input according to a doodle function. In an embodiment, each pixel data of the input frame may include RGB data (e.g., the 10-bit RGB data 704 per pixel) and mask information (e.g., the mask information 706). In operation 1815, the electronic device 200 (e.g., the processor 210) may obtain pixel data of the input frame.

In operation 1820, the electronic device 200 (e.g., the processor 210) may obtain mask information (e.g., 2 bits) included in first pixel data of the input frame. In operation 1825, the electronic device 200 (e.g., the processor 210) may determine whether the mask information indicates a mosaic pen (e.g., [Mosaic]), and may proceed to operation 1830 when the mask information indicates the mosaic pen. When the mask information does not indicate the mosaic pen, the electronic device 200 (e.g., the processor 210) may proceed to operation 1835.

In operation 1830, the electronic device 200 (e.g., the processor 210) may determine that first pixel data of the input frame belongs to a mosaic pen type, and may perform doodle blending on the first pixel data of the input frame and corresponding pixel data of the HDR image.

In operation 1835, the electronic device 200 (e.g., the processor 210) may determine whether the mask information indicates an alpha-based pen (e.g., [pen with Alpha]), and may proceeds to operation 1845 when the mask information indicates the alpha-based pen. When the mask information does not indicate the alpha-based pen (e.g., a non-alpha-based pen [pen without Alpha]), the electronic device 200 (e.g., the processor 210) may proceed to operation 1840.

In operation 1845, the electronic device 200 (e.g., the processor 210) may determine that the first pixel data of the input frame belongs to an alpha-based pen type, and may perform doodle blending on the first pixel data of the input frame and the corresponding pixel data of the HDR image.

In operation 1840, the electronic device 200 (e.g., the processor 210) may determine that the first pixel data of the input frame belongs to a non-alpha-based pen type, and may perform doodle blending on the first pixel data of the input frame and the corresponding pixel data of the HDR image.

An output image and output alpha information generated as a result of the doodle blending after operation 1830, operation 1850, or operation 1840, may be a destination image of next video editing.

In operation 1850, the electronic device 200 (e.g., the processor 210) may determine whether rendering (e.g., blending) of all pixels of the input frame is completed. When the rendering of all pixels is completed, the electronic device 200 (e.g., the processor 210) may terminate the procedure. When there are one or more remaining pixels that have not been rendered, the electronic device 200 (e.g., the processor 210) may proceed to operation 1815.

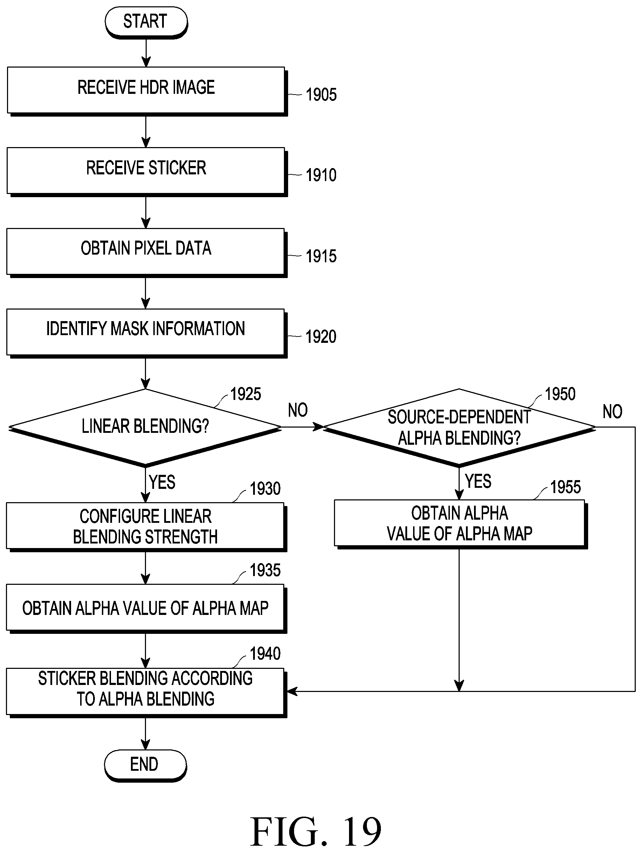

FIG. 19 is a flowchart illustrating a sticker blending procedure using mask information according to an embodiment. According to an embodiment, at least one of the following operations may be executed by the processor 210 of the electronic device 200. According to embodiments, at least one of the following operations may be omitted, modified, or changed in order.

Referring to FIG. 19, in operation 1905, the electronic device 200 (e.g., the processor 210) may receive an HDR image (e.g., at least one frame). In operation 1910, the electronic device 200 (e.g., the processor 210) may generate an image (e.g., an input frame) including a sticker, based on a user input according to a sticker function. In an embodiment, each pixel data of the input frame may include RGB data (e.g., the 10-bit RGB data 704 per pixel) and mask information (e.g., the mask information 706). In operation 1915, the electronic device 200 (e.g., the processor 210) may obtain pixel data of the input frame.

In operation 1920, the electronic device 200 (e.g., the processor 210) may identify (or obtain) mask information (e.g., 2 bits) included in first pixel data of the input frame. In operation 1925, the electronic device 200 (e.g., the processor 210) may determine whether the mask information indicates linear blending, and may proceed to operation 1930 when the mask information indicates the linear blending. When the mask information does not indicate the linear blending, the electronic device 200 (e.g., the processor 210) may proceed to operation 1950.

In operation 1930, the electronic device 200 (e.g., the processor 210) may configure blending strength for the first pixel data of the input frame for the linear blending. In operation 1935, the electronic device 200 (e.g., the processor 210) may obtain an alpha value corresponding to the first pixel data from an alpha map allocated for the input frame. In operation 1940, the electronic device 200 (e.g., the processor 210) may perform sticker blending on the first pixel data of the input frame and corresponding pixel data of the HDR image, based on the alpha value.

In operation 1950, the electronic device 200 (e.g., the processor 210) may determine whether the mask information indicates source-dependent alpha blending (follow source alpha), and may proceed to operation 1955 when the mask information indicates the source-dependent alpha blending. In operation 1955, the electronic device 200 (e.g., the processor 210) may obtain the alpha value corresponding to the first pixel data from the alpha map allocated for the input frame in order to perform the source-dependent alpha blending. When the mask information does not indicate the source-dependent alpha blending (e.g., indicates destination-dependent alpha blending (follow destination alpha)), the electronic device 200 (e.g., the processor 210) may proceed to operation 1940 without obtaining alpha information.

After operation 1935 or operation 1955, in operation 1940, the electronic device 200 (e.g., the processor 210) may perform sticker blending on the first pixel data of the input frame and the corresponding pixel data of the HDR image, based on the alpha value. Output alpha information generated as a result of the sticker blending including the source-dependent alpha blending may be determined based on the alpha value corresponding to the first pixel data of the input frame.

When the mask information does not indicate the source-dependent alpha blending in operation 1950, the electronic device 200 (e.g., the processor 210) may perform sticker blending on the first pixel data of the input frame and the corresponding pixel data of the HDR image in operation 1940. Output alpha information generated as a result of the sticker blending including the destination-dependent alpha blending may be determined as an alpha value corresponding to the corresponding pixel data of the HDR image. After operation 1945, an output image and the output alpha information generated as a result of the sticker blending may be a destination image of next video editing.

Embodiments of the disclosure may provide an HDR-based editing function without significantly changing a module configuration used in an SDR-based editing environment, and may also save memory capacity required to store alpha information about an HDR image format. Further, it is possible to prevent restriction of an editing function due to a memory capacity limit in an electronic device having limited memory.

Embodiments of the disclosure may configure each pixel data of an image in a 40-bit format (e.g., 32-bit pixel data 708 and 8-bit alpha value 710) instead of a 64-bit format (e.g., RGBA16F) to provide an HDR-based editing function, thereby improving graphic rendering performance of the image frame.

Embodiments of the disclosure may provide mask information for supporting a pixel-based editing function by using 2 idle bits of pixel data secured by allocation of an alpha map. Provision of the mask information may enable appropriate use of memory in doodle blending in which a plurality of strokes, such as pen inputs, occurs.

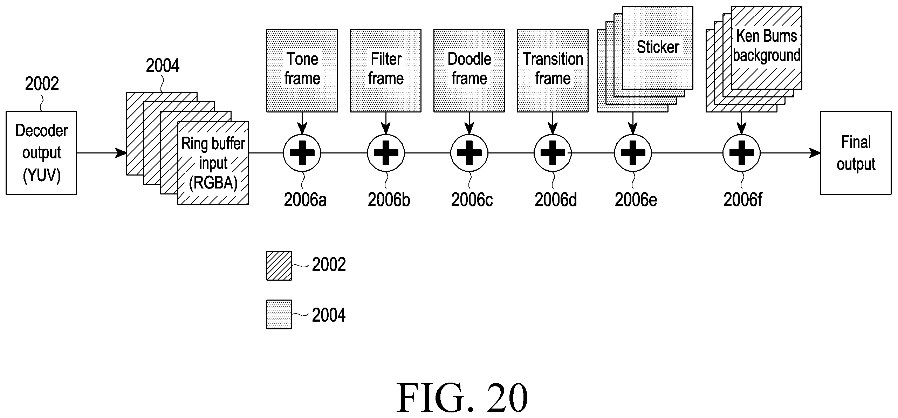

FIG. 20 illustrates memory usage according to an embodiment.

Referring to FIG. 20, a decoder output 2002 (e.g., a YUV format) may be input frames of blending, and may be stored in a ring buffer 2004 including a plurality of (e.g., four) frame buffers. An input frame read from the ring buffer 2004 may be blended with a tone image (e.g., a tone frame) in a first blender 2006a. An output frame from the first blender 2006a may be blended with a filter image (e.g., a filter frame) in a second blender 2006b. A third blender 2006c may blend an output frame from the second blender 2006b with a doodle image (e.g., a doodle frame). A fourth blender 2006d may blend an output frame from the third blender 2006c with a transition image (e.g., a transition frame). A fifth blender 2006e may blend an output frame from the fourth blender 2006d with sticker images (e.g., four sticker frames). A sixth blender 2006f may blend an output frame from the fifth blender 2006e with Ken Burns background images (e.g., four Ken Burns background frames). An output from the sixth blender 2006f may be a final output frame 2008.

In an embodiment, the electronic device 200 may perform pre-multiplied RGB blending on the input frames read from the ring buffer 2004 and the Ken burns background frames without allocating alpha maps therefor. In an embodiment, the electronic device 200 may perform alpha blending with a destination frame (e.g., the input frame read from the ring buffer 2004 or an output frame from previous blending) on the tone frame, the filter frame, the doodle frame, the transition frame, and the sticker frames by allocating at least one alpha map therefor.

In an embodiment, the input image may include a full high density (FHD) HDR video.

For example, required memory usage may correspond to 8 frames for the ring buffers, 1 frame for the tone image, 1 frame for the filter image, 1 frame for the doodle image, 4 frames for the Ken Burns background images, 1 frame for the transition image, and 4 frames for the sticker images.

When an RGBA1F format (8 bytes) is used for each frame, the required memory usage may be as follows:

$$(1920 * 1080) * 8 \text{ bytes} * 20 = 316.4\text{MB } [331,776,000]$$

When an RGBM1010102 format including masking information and a 1-byte alpha value based on an alpha map are used according to embodiments of the disclosure, the required memory usage may be as follows:

$$(1920 * 1080) * 4 \text{ bytes} * 20 + (1920 * 1080) * 1 \text{ byte} * 8 = 174MB \ [182,476,800]$$

In the above example, memory may be saved by 45% by applying embodiments of the disclosure.

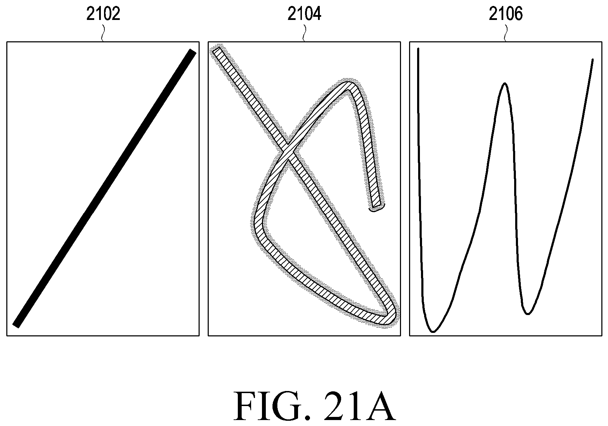

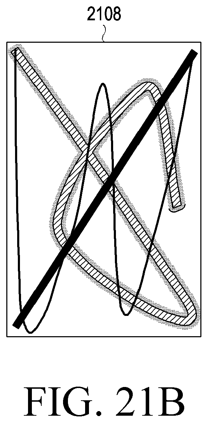

FIG. 21A and FIG. 21B illustrate storage of a doodle image according to an embodiment.

Referring to FIG. 21A, the electronic device 200 may receive a plurality of pen strokes, and the plurality of pen strokes may have different pen types (e.g., a fountain pen, a highlighter, or a pencil). When the plurality of pen strokes is stored as separate frames 2102, 2104, and 2106, memory capacity for the three frames may be required.

Referring to FIG. 21B, the electronic device 200 may synthesize the plurality of pen strokes 2102, 2104, and 2106 to store one frame 2108, and may include mask information specifying the pen type (e.g., a mosaic pen type) of each pen stroke in each pixel data of the frame. The electronic device 200 may store the plurality of pen strokes as a single frame 2108 instead of storing the same as separate frames 2102, 2104, and 2106, thereby saving memory usage. In addition, the electronic device 200 may perform blending by distinguishing the pen type of each pixel data of the frame 2108, thereby improving blending performance. As described above, embodiments of the disclosure may retain the pen type of each pixel in blending while reducing memory usage.

An electronic device 200 according to an embodiment may include memory 230 and at least one processor 210. The at least one processor may be configured to obtain a first image. The at least one processor may be configured to generate a first input frame to be blended with the first image. Each pixel data of the first input frame may include RGB data and mask information indicating a blending method for the pixel data. The at least one processor may be configured to allocate a first alpha map including alpha values per pixel for the first input frame to the first input frame. The at least one processor may be configured to determine the blending method for frame color blending of the first input frame and the first image, based on the mask information. The at least one processor may be configured to perform frame color blending of the first input frame and a second input frame of the first image, based on the determined blending method and the first alpha map. The at least one processor may be configured to output a second image generated by the frame color blending.

In an embodiment, the at least one processor may be configured to generate RGB data and a second alpha map based on the first input frame and the second input frame by the frame color blending, and store the second alpha map in replacement of the first alpha map.

In an embodiment, the at least one processor may be configured to perform whether there is a third alpha map generated in previous blending when alpha blending of the first input frame is not required, deallocate the third alpha map when there is the third alpha map, and perform pre-multiplied RGB blending on the first input frame and the second input frame.

In an embodiment, the at least one processor may be configured to determine whether there is a fourth alpha map allocated in previous blending when the alpha blending of the first input frame is required, allocate the fourth alpha map to the first input frame when there is the fourth alpha map, and allocate the first alpha map to the first input frame when the alpha blending of the first input frame is required and there is no fourth alpha map.

In an embodiment, the at least one processor may be configured to maintain allocation of a memory area, in which the first alpha map is stored, to be reused for next blending.

In an embodiment, each pixel data of the first input frame may include the RGB data of 10 bits per color channel and the mask information of 2 bits without alpha information.

In an embodiment, the at least one processor may be configured to identify that the first input frame includes a pen stroke image, identify the mask information about first pixel data of the first input frame, perform mosaic pen-type doodle blending on the first pixel data and second pixel data of the second input frame when the mask information indicates a mosaic pen type, perform doodle blending on the first pixel data and the second pixel data of the second input frame, based on an alpha value of an alpha map allocated for first input data when the mask information indicates an alpha-based pen type, and perform doodle blending on the first pixel data and the second pixel data of the second input frame, based on a specified alpha value when the mask information indicates a non-alpha-based pen type.

In an embodiment, the at least one processor may be configured to receive a first pen stroke, receive a second pen stroke, generate the first input frame including the pen stroke image by combining the first pen stroke and the second pen stroke, and include the mask information in each pixel data of the first input frame instead of alpha information.

In an embodiment, the at least one processor may be configured to identify that the first input frame includes a sticker image, identify the mask information about the first pixel data of the first input frame, perform linear blending on the first pixel data and the second pixel data of the second input frame, based on a first alpha value of the first alpha map allocated for the first input data and a second alpha value of the second alpha map corresponding to the second input frame when the mask information indicates the linear blending, perform source-dependent alpha blending on the first pixel data and the second pixel data of the second input frame, based on the first alpha value and the second alpha value when the mask information indicates the source-dependent alpha blending, and perform destination-dependent alpha blending on the first pixel data and the second pixel data of the second input frame, based on the first alpha value and the second alpha value when the mask information indicates the destination-dependent alpha blending.

In an embodiment, the at least one processor may be configured to receive the sticker image, generate the first input frame including the sticker image, and include the mask information in each pixel data of the first input frame instead of alpha information.

A method of an electronic device 200 for video editing according to an embodiment may include obtaining a first image (1005). The method may include generating a first input frame to be blended with the first image (1010 and 1015). Each pixel data of the first input frame may include RGB data and mask information indicating a blending method for the pixel data. The method may include allocating a first alpha map including alpha values per pixel for the first input frame to the first input frame (1030). The method may include determining the blending method for frame color blending of the first input frame and the first image, based on the mask information (1035). The method may include performing frame color blending of the first input frame and a second input frame of the first image, based on the determined blending method and the first alpha map (1040). The method may include outputting a second image generated by the frame color blending (1045).

In an embodiment, the performing of the frame color blending may include generating RGB data and a second alpha map based on the first input frame and the second input frame by the frame color blending; and storing the second alpha map in replacement of the first alpha map.

In an embodiment, the performing of the frame color blending may include performing whether there is a third alpha map generated in previous blending when alpha blending of the first input frame is not required, deallocating the third alpha map when there is the third alpha map, and performing pre-multiplied RGB blending on the first input frame and the second input frame.

In an embodiment, the method may further include determining whether there is a fourth alpha map allocated in previous blending when the alpha blending of the first input frame is required, and allocating the fourth alpha map to the first input frame when there is the fourth alpha map. The allocating of the first alpha map may include allocating the first alpha map to the first input frame when the alpha blending of the first input frame is required and there is no fourth alpha map.

In an embodiment, the method may further include maintaining allocation of a memory area, in which the first alpha map is stored, to be reused for next blending.

In an embodiment, each pixel data of the first input frame may include the RGB data of 10 bits per color channel and the mask information of 2 bits without alpha information.

In an embodiment, the performing of the frame color blending may include identifying that the first input frame includes a pen stroke image, performing mosaic pen-type doodle blending on the first pixel data and second pixel data of the second input frame when the mask information about first pixel data of the first input frame indicates a mosaic pen type, performing doodle blending on the first pixel data and the second pixel data of the second input frame, based on an alpha value of an alpha map allocated for first input data when the mask information indicates an alpha-based pen type, and performing doodle blending on the first pixel data and the second pixel data of the second input frame, based on a specified alpha value when the mask information indicates a non-alpha-based pen type.

In an embodiment, the generating of the first frame may include receiving a first pen stroke, receiving a second pen stroke, generating the first input frame including the pen stroke image by combining the first pen stroke and the second pen stroke, and including the mask information in each pixel data of the first input frame instead of alpha information.

In an embodiment, the performing of the frame color blending may include identifying that the first input frame includes a sticker image, identifying the mask information about the first pixel data of the first input frame, performing linear blending on the first pixel data and the second pixel data of the second input frame, based on a first alpha value of the first alpha map allocated for the first input data and a second alpha value of the second alpha map corresponding to the second input frame when the mask information indicates the linear blending, performing source-dependent alpha blending on the first pixel data and the second pixel data of the second input frame, based on the first alpha value and the second alpha value when the mask information indicates the source-dependent alpha blending, and performing destination-dependent alpha blending on the first pixel data and the second pixel data of the second input frame, based on the first alpha value and the second alpha value when the mask information indicates the destination-dependent alpha blending.

In an embodiment, the generating of the first input frame may include receiving the sticker image, generating the first input frame including the sticker image, and including the mask information in each pixel data of the first input frame instead of alpha information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., memory 390, internal memory 136 or external memory 138) that is readable by a machine (e.g., the electronic device 202, 204 or 101). For example, a processor (e.g., the processor 310 or 120) of the machine (e.g., the electronic device 202, 204 or 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (200) for video editing, the electronic device comprising:

    memory (230); and
    at least one processor (210) connected to the memory,
    wherein the at least one processor is configured to:
    obtain a first image;
    generate a first input frame to be blended with the first image, each pixel data of the first input frame comprising red, green, and blue (RGB) data and mask information indicating a blending method for the pixel data;
    allocate a first alpha map comprising alpha values per pixel for the first input frame to the first input frame;
    determine the blending method for frame color blending of the first input frame and the first image, based on the mask information;
    perform frame color blending of the first input frame and a second input frame comprising the first image, based on the determined blending method and the first alpha map; and
output a second image generated by the frame color blending.

2. The electronic device of claim 1, wherein the at least one processor is configured to:

generate RGB data and a second alpha map based on the first input frame and the second input frame by the frame color blending; and
store the second alpha map in replacement of the first alpha map.

3. The electronic device of claim 1 or 2, wherein the at least one processor is configured to:

perform whether there is a third alpha map generated in previous blending when alpha blending of the first input frame is not required;
deallocate the third alpha map when there is the third alpha map; and
perform pre-multiplied RGB blending on the first input frame and the second input frame.

4. The electronic device of any one of claims 1 to 3, wherein the at least one processor is configured to:

determine whether there is a fourth alpha map allocated in previous blending when the alpha blending of the first input frame is required;
allocate the fourth alpha map to the first input frame when there is the fourth alpha map; and
allocate the first alpha map to the first input frame when the alpha blending of the first input frame is required and there is no fourth alpha map.

5. The electronic device of any one of claims 1 to 4, wherein the at least one processor is configured to maintain allocation of a memory area, in which the first alpha map is stored, to be reused for next blending.

6. The electronic device of any one of claims 1 to 5, wherein each pixel data of the first input frame comprises the RGB data of 10 bits per color channel and the mask information of 2 bits without alpha information.

7. The electronic device of any one of claims 1 to 6, wherein the at least one processor is configured to:

identify that the first input frame comprises a pen stroke image;
identify the mask information about first pixel data of the first input frame;
perform mosaic pen-type doodle blending on the first pixel data and second pixel data of the second input frame when the mask information indicates a mosaic pen type;
perform doodle blending on the first pixel data and the second pixel data of the second input frame, based on an alpha value of an alpha map allocated for first input data when the mask information indicates an alpha-based pen type; and
perform doodle blending on the first pixel data and the second pixel data of the second input frame, based on a specified alpha value when the mask information indicates a non-alpha-based pen type.

8. The electronic device of claim 7, wherein the at least one processor is configured to:

receive a first pen stroke;
receive a second pen stroke;
generate the first input frame comprising the pen stroke image by combining the first pen stroke and the second pen stroke; and
comprise the mask information in each pixel data of the first input frame instead of alpha information.

9. The electronic device of any one of claims 1 to 7, wherein the at least one processor is configured to:

identify that the first input frame comprises a sticker image;
identify the mask information about the first pixel data of the first input frame;
perform linear blending on the first pixel data and the second pixel data of the second input frame, based on a first alpha value of the first alpha map allocated for the first input data and a second alpha value of the second alpha map corresponding to the second input frame when the mask information indicates the linear blending;
perform source-dependent alpha blending on the first pixel data and the second pixel data of the second input frame, based on the first alpha value and the second alpha value when the mask information indicates the source-dependent alpha blending; and

perform destination-dependent alpha blending on the first pixel data and the second pixel data of the second input frame, based on the first alpha value and the second alpha value when the mask information indicates the destination-dependent alpha blending.

10. The electronic device of claim 9, wherein the at least one processor is configured to:

receive the sticker image;
generate the first input frame comprising the sticker image; and
comprise the mask information in each pixel data of the first input frame instead of alpha information.

11. A method of an electronic device (200) for video editing, the method comprising:

obtaining a first image (1005);
generating a first input frame to be blended with the first image (1010), each pixel data of the first input frame comprising red, green, and blue (RGB) data and mask information indicating a blending method for the pixel data;
allocating a first alpha map comprising alpha values per pixel for the first input frame to the first input frame (1015);
determining the blending method for frame color blending of the first input frame and the first image, based on the mask information (1020);
performing frame color blending of the first input frame and a second input frame comprising the first image, based on the determined blending method and the first alpha map (1025); and
outputting a second image generated by the frame color blending (1030).

12. The method of claim 11, wherein the performing of the frame color blending comprises:

generating RGB data and a second alpha map based on the first input frame and the second input frame by the frame color blending; and
storing the second alpha map in replacement of the first alpha map.

13. The method of claim 11 or 12, wherein the performing of the frame color blending further comprises:

performing whether there is a third alpha map generated in previous blending when alpha blending of the first input frame is not required;
deallocating the third alpha map when there is the third alpha map;
performing pre-multiplied RGB blending on the first input frame and the second input frame;
determining whether there is a fourth alpha map allocated in previous blending when the alpha blending of the first input frame is required; and
allocating the fourth alpha map to the first input frame when there is the fourth alpha map, and
the allocating of the first alpha map comprises allocating the first alpha map to the first input frame when the alpha blending of the first input frame is required and there is no fourth alpha map.

14. The method of any one of claims 11 to 13, further comprising:
maintaining allocation of a memory area, in which the first alpha map is stored, to be reused for next blending.

15. The method of any one of claims 11 to 14, wherein each pixel data of the first input frame comprises the RGB data of 10 bits per color channel and the mask information of 2 bits without alpha information.

EP 4 586 183 A1

FIG. 1

FIG. 2

FIG. 3

| R (8bits) | G (8bits) | B (8bits) | A (8bits) | _402 |
| --- | --- | --- | --- | --- |

↓

| R (16bits) | G (16bits) | B (16bits) | A (16bits) | _404 |
| --- | --- | --- | --- | --- |

# FIG. 4A

| R (8bits) | G (8bits) | B (8bits) | A (8bits) | _412 |
| --- | --- | --- | --- | --- |

↓

| R (10bits) | G (10bits) | B (10bits) | A (2bits) | _414 |
| --- | --- | --- | --- | --- |

# FIG. 4B

502      504      506      508

| Decoder | → | HDR image (P010) | → | HDR - SDR conversion module | → | SDR image |

516      514      512      510

| Encoder | ← | RGB - YUV conversion module | ← | SDR - HDR conversion module | ← | SDR rendering module |

# FIG. 5A

520      522      524      526      528

| Decoder | → | HDR image (P010) | → | HDR rendering module | → | RGB - YUV conversion module | → | Encoder |

# FIG. 5B

605                                    610
Input HDR                          Editing
image                              module

                                      615

                                  SDR-HDR
                                  conversion
                                  module

                                      630                          620

                                                          A    α map
                        Frame color                            management
635                     blending                               module
                        module
output                                                             625
HDR image                                                 M    Mask analysis
                                                               module

FIG. 6

702

| R (8bits) | G (8bits) | B (8bits) | α (8bits) |
|---|---|---|---|

708

| R (10bits) | G (10bits) | B (10bits) | M (2bits) |     +     | A (8bits) |
|---|---|---|---|---|

704                              706              710

FIG. 7

810 — First input
RGB frame

First input
α map

815

820 — Second input
RGB frame

Second input
α map

825

630

Frame color
blending
module

Output
RGB frame — 830

Output α map — 835

620

α map
management
module

# FIG. 8

910

912

RGBA1010102

914

First α (8)

920

922

RGBA1010102

924

Second α (8)

925

930

932

RGBA1010102

934

Third α (8)

940

942

RGBA1010102

944

Fourth α (8)

945

950

952

RGBA1010102

954

Fifth α (8)

# FIG. 9A

960

RGBA1010102

975

Pre-multiplied
RGB blending

980

RGBA1010102

995

Pre-multiplied
RGB blending

970

972

RGBA1010102

974

First α (8)

990

992

RGBA1010102

994

Second α (8)

# FIG. 9B

START

OBTAIN FIRST IMAGE — 1005

GENERATE FIRST INPUT FRAME
(RGBM) INCLUDING EDIT OBJECT — 1010

ALLOCATE FIRST ALPHA MAP — 1015

DETERMINE BLENDING METHOD — 1020

PERFORM FRAME COLOR BLENDING — 1025

OUTPUT SECOND IMAGE — 1030

END

# FIG. 10

General pen : RGB(0,0,0), α(0.4)

Mosaic pen : RGB(0,0,0), α(0.4)

Store

FIG. 11

EP 4 586 183 A1

1210

General pen : RGB(0,0,0), α(0.4)
2-bit masking: alpha pen

1220   1210

Mosaic pen : RGB(0,0,0), α(0.4)
2-bit masking: mosaic

Store

1230

FIG. 12

1300

Restore original    Store

1305

1310

Mosaic

8. With expressions full of compliments and gratitude

Draw    Sticker    Text

1320

Alpha pen

Non-alpha pen

1330

FIG. 13

1410

1420

Sticker

Media

glBlendFunc(GL_SRC_ALPHA, GL_ONE_MINUS_SRC_ALPHA)

1415 ~ : GL_SRC_ALPHA

1425 ~ : GL_ONE_MINUS_SRC_ALPHA

# FIG. 14

1510

1520

1510a

1510b

1510c

Sticker

Media

1505 ~ : Source-dependent alpha

1515 ~ : Source-dependent alpha

1525 ~ : Linear blending

# FIG. 15

FIG. 16

START

RECEIVE HDR IMAGE — 1705

SELECT EDITING FUNCTION — 1710

CONFIGURE EDIT OBJECT — 1715

RETAIN OUTPUT ALPHA? 1720

YES → IS THERE ALLOCATED ALPHA MAP? 1750

YES

NO

ALLOCATE ALPHA MAP 1755

ALPHA BLENDING 1760

NO

IS THERE ALLOCATED ALPHA MAP? 1725

YES

RELEASE ALPHA MAP 1730

NO

PRE-MULTIPLIED RGB BLENDING 1735

DISPLAY BLENDING RESULT 1740

IS EDITING COMPLETED? 1745

NO

YES

END

FIG. 17

START

RECEIVE HDR IMAGE — 1805

RECEIVE PEN STROKE — 1810

OBTAIN PIXEL DATA — 1815

IDENTIFY MASK INFORMATION — 1820

MOSAIC PEN? — 1825

NO →

IS ALPHA USED? — 1835 — NO

YES

ALPHA-BASED PEN PIXEL BLENDING — 1845

GENERAL PEN PIXEL BLENDING — 1840

YES

MOSAIC PEN PIXEL BLENDING — 1830

IS BLENDING OF ALL PIXELS COMPLETED? — 1850 — NO

YES

END

FIG. 18

START

RECEIVE HDR IMAGE — 1905

RECEIVE STICKER — 1910

OBTAIN PIXEL DATA — 1915

IDENTIFY MASK INFORMATION — 1920

LINEAR BLENDING? 1925

NO → SOURCE-DEPENDENT ALPHA BLENDING? 1950

NO →

YES

CONFIGURE LINEAR BLENDING STRENGTH 1930

YES

OBTAIN ALPHA VALUE OF ALPHA MAP 1955

OBTAIN ALPHA VALUE OF ALPHA MAP 1935

STICKER BLENDING ACCORDING TO ALPHA BLENDING 1940

END

FIG. 19

FIG. 20

2102

2104

2106

FIG. 21A

2108

FIG. 21B

## INTERNATIONAL SEARCH REPORT

International application No.

**PCT/KR2023/013352**

### A. CLASSIFICATION OF SUBJECT MATTER

**G06T 5/00**(2006.01)i; **G06T 5/50**(2006.01)i; **G06T 7/90**(2017.01)i; **G06T 3/40**(2006.01)i; **H04N 9/67**(2006.01)i; **G06T 1/60**(2006.01)i

According to International Patent Classification (IPC) or to both national classification and IPC

### B. FIELDS SEARCHED

Minimum documentation searched (classification system followed by classification symbols)

G06T 5/00(2006.01); G06T 1/20(2006.01); G06T 19/20(2011.01); G09G 5/02(2006.01); G09G 5/377(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이미지(image), 블렌딩(blending), 입력 프레임(input frame), 마스크 정보(mask information), 픽셀(pixel), 알파 맵(alpha map)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0012095 A (SAMSUNG ELECTRONICS CO., LTD.) 03 February 2021 (2021-02-03) <br> See paragraphs [0019]-[0038]. | 1-15 |
| A | KR 10-2022-0028698 A (SAMSUNG ELECTRONICS CO., LTD.) 08 March 2022 (2022-03-08) <br> See paragraphs [0018]-[0020]. | 1-15 |
| A | KR 10-2138847 B1 (GOOGLE LLC) 28 July 2020 (2020-07-28) <br> See paragraphs [0040]-[0046]. | 1-15 |
| A | JP 2022-539962 A (ATI TECHNOLOGIES ULC) 14 September 2022 (2022-09-14) <br> See claims 1, 14 and 27. | 1-15 |
| A | US 6927778 B2 (ALEKSIC, Milivoje et al.) 09 August 2005 (2005-08-09) <br> See claims 1 and 12. | 1-15 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 December 2023** | **05 December 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013352**

| Patent document cited in search report | | | Publication date (day/month/year) | Patent family member(s) | | | Publication date (day/month/year) |
|---|---|---|---|---|---|---|---|
| KR | 10-2021-0012095 | A | 03 February 2021 | CN | 112309341 | A | 02 February 2021 |
| | | | | US | 11049429 | B2 | 29 June 2021 |
| | | | | US | 2021-0027685 | A1 | 28 January 2021 |
| KR | 10-2022-0028698 | A | 08 March 2022 | CN | 114125322 | A | 01 March 2022 |
| | | | | JP | 2022-041985 | A | 11 March 2022 |
| | | | | US | 11694617 | B2 | 04 July 2023 |
| | | | | US | 2022-0068201 | A1 | 03 March 2022 |
| KR | 10-2138847 | B1 | 28 July 2020 | CN | 110392904 | A | 29 October 2019 |
| | | | | EP | 3568833 | A1 | 20 November 2019 |
| | | | | EP | 3568833 | B1 | 05 August 2020 |
| | | | | JP | 2020-526808 | A | 31 August 2020 |
| | | | | JP | 6831482 | B2 | 17 February 2021 |
| | | | | US | 10529124 | B2 | 07 January 2020 |
| | | | | US | 2019-0066367 | A1 | 28 February 2019 |
| | | | | WO | 2019-038604 | A1 | 28 February 2019 |
| JP | 2022-539962 | A | 14 September 2022 | CN | 113939847 | A | 14 January 2022 |
| | | | | EP | 3991133 | A1 | 04 May 2022 |
| | | | | KR | 10-2022-0027963 | A | 08 March 2022 |
| | | | | US | 11488349 | B2 | 01 November 2022 |
| | | | | US | 2020-0410748 | A1 | 31 December 2020 |
| | | | | US | 2023-0041733 | A1 | 09 February 2023 |
| | | | | WO | 2020-257941 | A1 | 30 December 2020 |
| US | 6927778 | B2 | 09 August 2005 | US | 2003-0214508 | A1 | 20 November 2003 |

Form PCT/ISA/210 (patent family annex) (July 2022)